# EUROPEAN PATENT APPLICATION

(11) **EP 4 683 410 A1**
(43) Date of publication of application: **21.01.2026**
(21) Application number: 23928050.6
(22) Date of filing: 22.03.2023
(51) Int. Cl.: H04W 72/0453

(54) **CHANNEL OPERATION METHOD AND APPARATUS, COMMUNICATION DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: LU, Liuming, Dongguan, Guangdong 523860 (CN); ZHOU, Pei, Dongguan, Guangdong 523860 (CN); LUO, Chaoming, Dongguan, Guangdong 523860 (CN); LI, Yapu, Dongguan, Guangdong 523860 (CN)
(74) Representative: Novagraaf Technologies
(86) International application number: PCT/CN2023/083204
(87) International publication number: WO 2024/192737

(57) **Abstract**

A channel operation method and apparatus, a communication device, and a storage medium, relating to the technical field of wireless communications. The method is executed by a first device, and comprises: receiving a dynamic subchannel operation (DSO) mode management frame sent by a second device (401), wherein the DSO mode management frame is used for indicating that a DSO mode between the first device and the second device is an enable mode or a disable mode, the enable mode is a mode allowing a target device to be switched to a target subchannel in a DSO mode for frame exchange, and the target subchannel is indicated by the DSO mode management frame.

## Description

### TECHNICAL FIELD

The present disclosure relates to the technical field of wireless communications, and in particular, relates to a method and apparatus for channel operation, and a communication device and a storage medium thereof.

### RELATED ART

In the wireless local area network (WLAN), a subchannel between an access point (AP) device and a non-AP device is dynamically transitioned during communication between the AP device and the non-AP device.

In some practices, an AP device is in communication with a non-AP device on a primary channel, and in a case where the AP device gains a transmission opportunity (TXOP) on a secondary channel, the AP device instructs the non-AP device to switch to the secondary channel; and the non-AP device switches to the primary channel at the end of the TXOP.

### SUMMARY

Embodiments of the present disclosure provide a method and apparatus for channel operation, and a communication device and a storage medium thereof. The technical solutions are as follows.

According to an aspect of the embodiments of the present disclosure, a method for channel operation is provided. The method is performed by a first device, and includes:
receiving a dynamic subchannel operation (DSO) mode management frame from a second device, wherein the DSO mode management frame is configured to indicate that a DSO mode between the first device and the second device is an enabled mode or a disabled mode, wherein the enabled mode is a mode in which a target device is allowed to switch to a target subchannel via a DSO mode to perform frame exchange, wherein the target subchannel is indicated by the DSO mode management frame.

According to an aspect of the embodiments of the present disclosure, a method for channel operation is provided. The method is performed by a second device, and includes:
transmitting a DSO mode management frame to a first device, wherein the DSO mode management frame is configured to indicate that a DSO mode between the first device and the second device is an enabled mode or a disabled mode, wherein the enabled mode is a mode in which a target device is allowed to switch to a target subchannel via a DSO mode to perform frame exchange, wherein the target subchannel is indicated by the DSO mode management frame.

According to another aspect of the embodiments of the present disclosure, an apparatus for channel operation is provided. The apparatus includes:
a receiving module, configured to receive a DSO mode management frame from a second device, wherein the DSO mode management frame is configured to indicate that a DSO mode between a first device and the second device is an enabled mode or a disabled mode, wherein the enabled mode is a mode in which a target device is allowed to switch to a target subchannel via a DSO mode to perform frame exchange, wherein the target subchannel is indicated by the DSO mode management frame.

According to another aspect of the embodiments of the present disclosure, an apparatus for channel operation is provided. The apparatus includes:
a transmitting module, configured to transmit a DSO mode management frame to a first device, wherein the DSO mode management frame is configured to indicate that a DSO mode between the first device and a second device is an enabled mode or a disabled mode, wherein the enabled mode is a mode in which a target device is allowed to switch to a target subchannel via a DSO mode to perform frame exchange, wherein the target subchannel is indicated by the DSO mode management frame.

According to another aspect of the embodiments of the present disclosure, a communication device is provided. The communication device is practiced as a multi-link device, and includes: a processor, a memory, and a transceiver. The memory stores one or more computer programs. The processor, when loading and running the one or more computer programs, cause the communication device to perform the method for channel operation.

According to another aspect of the embodiments of the embodiments of the present disclosure, a computer-readable storage medium is provided. The computer-readable storage medium stores one or more computer programs. The one or more computer programs, when loaded and run by a processor, cause the processor to perform the method for channel operation.

According to another aspect of the embodiments of the embodiments of the present disclosure, a computer program product is provided. The computer program product includes one or more computer instructions stored in a computer-readable storage medium. The one or more computer instructions, when read, loaded, and executed by a processor of a communication device, cause the communication device to perform the method for channel operation.

According to another aspect of the embodiments of the embodiments of the present disclosure, a chip is provided. The chip includes programmable logic circuitry and/or program instructions. The chip is configured to run in a communication device to cause the communication device to perform the method for channel operation.

According to another aspect of the embodiments of the embodiments of the present disclosure, a computer program is provided. The computer program, when loaded and run by a processor of a communication device, causes the communication device to perform the method for channel operation

The technical solutions according to the embodiments of the present disclosure achieve at least the following technical effects.

The first device that supports the DSO receives the DSO mode management frame from the second device to negotiate whether to allow the target device in the two devices to switch to the target subchannel via the DSO mode to perform frame exchange. In the method, a negotiation mechanism for the DSO is proposed, such that the opportunity and the subchannel for the frame exchange based on the DSO between the first device and the second device are controllable, the flexibility of the DSO mechanism is improved, and the communication effect of the frame exchange based on the DSO is further improved.

### BRIEF DESCRIPTION OF DRAWINGS

For clearer descriptions of the technical solutions according to the embodiments of the present disclosure, the following briefly introduces the accompanying drawings required for describing the embodiments. Apparently, the accompanying drawings in the following description show merely some embodiments of the present disclosure, and persons of ordinary skill in the art may still derive other drawings from these accompanying drawings without creative efforts.
FIG. 1 is a schematic diagram of a network architecture of a communication system according to some embodiments of the present disclosure;
FIG. 2 is a schematic diagram of a format of an Individual target wake time (TWT) Parameter Setup field according to some embodiments of the present disclosure;
FIG. 3 is a schematic diagram of a DSO operation according to some embodiments of the present disclosure;
FIG. 4 is a flowchart of a method for channel operation according to some embodiments of the present disclosure;
FIG. 5 is a flowchart of a method for channel operation according to some embodiments of the present disclosure;
FIG. 6 is a flowchart of a method for channel operation according to some embodiments of the present disclosure;
FIG. 7 is a schematic diagram of a format of a DSO Mode Control field according to the embodiments of FIG. 6;
FIG. 8 is a schematic diagram of a format of a DSO Parameter Update field according to the embodiments of FIG. 6;
FIG. 9 is a schematic diagram of transition of a DSO mode and parameter update based on a notification frame according to some embodiments of FIG. 6;
FIG. 10 is a schematic diagram of transition of a DSO mode and parameter update based on a notification frame according to some embodiments of FIG. 6;
FIG. 11 is a schematic diagram of negotiation of a DSO mode and/or parameter update based on a request/response frame based on a notification frame according to some embodiments of FIG. 6;
FIG. 12 is a schematic diagram of negotiation of a DSO mode and/or parameter update based on a request/response frame based on a notification frame according to some embodiments of FIG. 6;
FIG. 13 is a block diagram of an apparatus for channel operation according to some embodiments of the present disclosure;
FIG. 14 is a block diagram of an apparatus for channel operation according to some embodiments of the present disclosure; and
FIG. 15 is a schematic structural diagram of a communication device according to some embodiments of the present disclosure.

### DETAILED DESCRIPTION

For clearer descriptions of the objects, technical solutions, and advantages of the present disclosure, the embodiments of the present disclosure are described in detail hereinafter in combination with the accompanying drawings.

The network architecture and service scenarios described in the embodiments of the present disclosure are intended to illustrate the technical solutions according to the embodiments of the present disclosure more clearly instead of any limitations. Those skilled in the art understand that with evolution of the network architecture and emergence of new service scenarios, the technical solutions according to the embodiments of the present disclosure are also applicable to addressing similar technical problems.

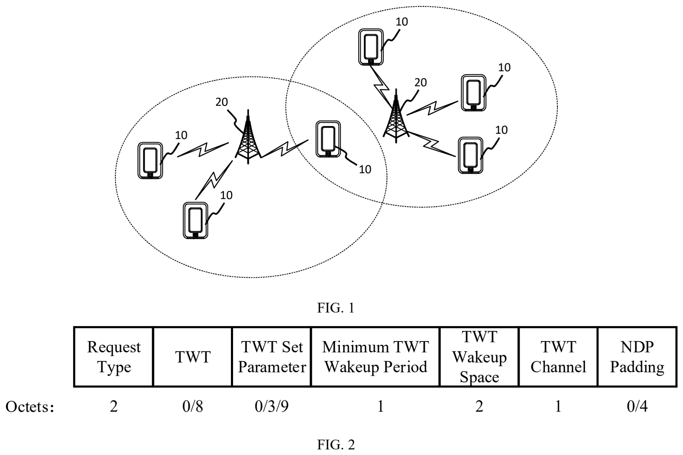

FIG. 1 is a schematic diagram of a network architecture of a communication system according to some embodiments of the present disclosure. The network architecture involves a station (STA) 10 and an access point 20.

In general, a plurality of stations 10 are disposed, and each access point 20 is associated with one or more stations 10. The station 10 includes various handheld devices with the wireless communication function, in-vehicle devices, wearable devices, computing devices or other processing devices connected to the wireless modem, and various forms of user equipments (UEs), mobile stations (MSs), and terminal devices. For convenient description, the devices are collectively referred to as the STA.

The access point 20 is a device deployed in the access network and configured to provide the wireless communication function for the station 10, and is also referred to as AP for short. The access point 20 includes various types of wireless routers, wireless switches, wireless relay devices, and the like.

The station 10 and/or the access point 20 may be a multi-link device.

In some embodiments, the network architecture may be other network device, for example, a gateway device, and the like, which is not illustrated in FIG. 1.

The station 10 and the access point 20 communicate with each other using the wireless local area network technology, for example, the IEEE 802.11 protocol.

The EEE 802.11 BF working group is discussing the protocol to stipulate how to use WLAN signals that comply with the IEEE 802.11 protocol to achieve WLAN sensing. The WLAN terminal participating in the sensing process may be a sensing session initiator, a sensing session responder, a sensing signal transmitter, and a sensing signal receiver.

The WLAN sensing session includes one or more of the following stages: session setup, sensing measurement, sensing report, and session termination. The WLAN terminal may play one or more roles in the sensing session. For example, a sensing session initiator is merely a sensing session initiator, a sensing signal transmitter, a sensing signal receiver, or a sensing signal transmitter and a sensing signal receiver.

Before description of the technical solution according to the present disclosure, the technologies involved in the present disclosure are described first.

### 1) High efficiency (HE) subchannel selective transmission (SST) operation

The HE SST non-AP STA and the HE SST AP negotiate a trigger-enabled TWT to set up the SST.

The TWT request may have a TWT Channel field with up to one bit set to 1 to indicate the secondary channel requested to contain the RU allocations addressed to the HE SST non-AP STA that is a 20 MHz operating STA.

The TWT request may have a TWT Channel field with all 4 least significant bits (LSBs) or all 4 most significant bits (MSBs) set to 1 to indicate whether the primary 80 MHz channel or the secondary 80 MHz channel is requested to contain the RU allocations addressed to the HE SST non-AP STA that is an 80 MHz operating STA.

The TWT response shall have a TWT Channel field with up to one bit set to 1 to indicate the secondary channel that will contain the resource unit (RU) allocations addressed to the HE SST non-AP STA that is a 20 MHz operating STA.

The TWT response shall have a TWT Channel field with all 4 LSBs or all 4 MSBs set to 1 to indicate whether the primary 80 MHz channel or the secondary 80 MHz channel will contain the RU allocations addressed to the HE SST non-AP STA that is an 80 MHz operating STA.

FIG. 2 is a schematic diagram of a format of an Individual TWT Parameter Setup field according to some embodiments of the present disclosure. An Individual TWT Parameter Set field in a TWT Parameter Information field in a TWT element contains a TWT Channel field.

The TWT Channel field contains a bitmap, and provides information of a temporary channel with a TWT service period (SP) that is negotiated by the STA. Each bit in the bitmap corresponds to a minimum bandwidth channel within a current-operating frequency band of a basic service set (BSS) associated with a TWT responder STA. The least significant bit corresponds to a lowest numbered channel in operating channels of the BSS. In the HE BSS, the minimum bandwidth channel is 20 MHz. Setting a position in the bitmap transmitted by the TWT requester STA to 1 is to request to determine the channel corresponding to the position as a temporary channel during the TWT SP. Setting a position in the bitmap transmitted by the TWT responder STA to 1 is to allow determining the channel corresponding to the position as a temporary channel during the TWT SP.

In a case where the HE SST AP changes the operating channel or the channel bandwidth, and any secondary channel of the trigger-enabled TWT is not within the new operating channel or channel bandwidth, the HE SST AP and the HE SST non-AP STA implicitly terminate the trigger-enabled TWT.

During the trigger-enabled TWT SP, the frame exchange between the HE SST AP and the HE SST non-AP STA follows the rules stipulated in the Individual TWT agreement, and the AP should ensure that:
a downlink (DL) multi-user (MU) physical layer protocol data unit (PPDU) addressing the HE SST non-AP STA and an individual addressing RU allocated in a trigger frame are located within a subchannel indicated in the TWT Channel field of the TWT response;
the trigger-enabled TWT SP is not overlapped with a target beacon transmission time (TBTT) for transmitting a delivery traffic indication message (DTIM) beacon frame; and
the same subchannel is used for the same HE SST non-AP STA and all trigger-enabled TWT SPs that overlap in time.

During the trigger-enabled TWT SP, the frame exchange between the HE SST non-AP STA and the HE SST AP follows the rules stipulated in the Individual TWT agreement, and the non-AP STA should ensure that:
the STA should be available in a subchannel indicated in the TWT Channel field of the TWT response at the start of the TWT;
a distributed coordination function (DCF) or enhanced distributed channel access function (EDCAF) shall not be used to access a medium in the subchannel; and
the non-AP STA shall not respond to the trigger frame transmitted to the non-AP STA unless the non-AP STA has performed clear channel assessment (CCA), until a frame that can set a network allocation vector (NAV) is detected or until a period equal to NAVSyncDelay occurs, whichever is earlier.

In a case where the PPDU is received in the subchannel, the NAV is updated based on the "updating two NAVs" rule in HE channel access.

The HE SST non-AP STA includes a channel transition timing element in a (re)association request frame transmitted to the HE SST AP to indicate a time required for transition of the STA between different subchannels. The received channel transition time notifies the HE SST AP a possible duration during which the HE SST non-AP STA does not receive the frame before the start of the TWT and after the end of the trigger-enabled TWT SP.

### 2) Dynamic subband operation

IEEE 802.11-22/2204r0 proposed the dynamic subband operation that allows a 320 MHz AP to dynamically indicate a transmission (Tx)/reception (Rx) opportunity on secondary 160 MHz to a 160 MHz non-AP device or to expand to any AP/non-AP STA bandwidth combination supported by the AP with a bandwidth higher than a bandwidth of a non-AP STA. In each dynamically allocated opportunity, the operation may be DL transmission or trigger-based uplink (UL) transmission.

The dynamic subband operation enables the AP to dynamically use secondary 160 MHz bandwidth in the TXOP in gaining channel access on the secondary 160 MHz.

The AP dynamically determines whether to allocate the bandwidth to the non-AP STA on the primary 160 MHz or the secondary 160 MHz based on bandwidth availability, channel conditions, and quality of service (QoS) requirements, and which non-AP STA to allocate in the method.

The dynamic subband operation is that in a case where the AP starts to acquire the TXOP in the 320 MHz bandwidth, the AP transmits an indication to a non-AP STA that supports the DSO to request the non-AP STA to transition to the secondary 160 MHz for the TXOP and then continue to perform the frame exchange on the secondary 160 MHz.

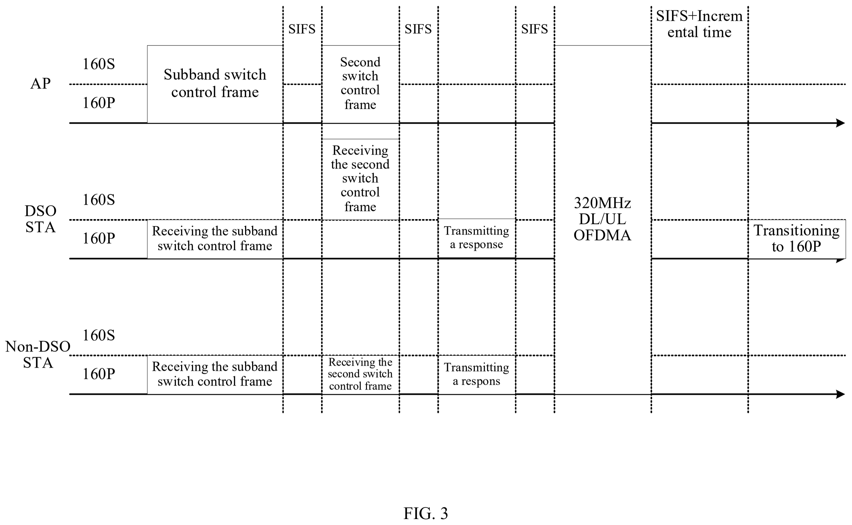

FIG. 3 is a schematic diagram of a DSO operation according to some embodiments of the present disclosure. The AP sends to the DSO non-AP being scheduled, a "subband-switch control frame," which is a special initial control frame (could be a modified MU-RTS or BSRP or a newly defined frame) that indicates a transition to the secondary 160 MHz.

The subband switch control frame has sufficient padding to cover the subband switch delay (that is, the delay required for the non-AP STA to transition from the primary 160 MHz to the secondary 160 MHz). At the end of the TXOP (for example, the end of the TXOP is monitored via an interval of the SIFS plus an incremental time), the DSO non-AP transitions to operating on the primary 160 MHz.

Currently, the HE SST operation in IEEE 802.11ax is defined based on the individual TWT. That is, the non-AP STA that performs the HE SST operation needs to first negotiate and set up an individual TWT agreement with the AP, and then the AP and the non-AP STA perform the frame exchange during the scheduled trigger-enabled TWT SP via the SST. The main problem of the HE SST operation is the lack of dynamicity in the pre-scheduled SP, that is,
1) during the pre-scheduled semi-static SP, it is impossible to ensure that the AP gains a channel access opportunity on the secondary channel; and in a case where the AP fails to gain the channel access opportunity on the secondary channel, the advantages of the SST operation may be not demonstrated; and
2) in a case where the AP gains the access opportunity on the secondary channel beyond the semi-static SP, the AP may not schedule any SST non-AP STA for the SST operation during the period.

The dynamic subband operation allows dynamically indicating that the non-AP STA that supports the DSO performing the frame exchange on the specified secondary channel during the TXOP period after the AP acquires the TXOP. Although the DSO method improves the dynamicity, the method lacks a mechanism for negotiation between the AP and the non-AP STA for the DSO. Without such negotiation, it is difficult to ensure that the non-AP STA is suitable for the DSO operation due to lack of the negotiation. For example, whether the DSO operation can be effectively executed or demonstrate its advantages is subject to some factors, for example, communication behavior requirements of the non-AP station, the suitability of channel conditions of the non-AP station on the secondary channel (for example, a received signal strength indicator (RSSI)) for frame exchange on the secondary channel, and QoS parameter requirements of the non-AP station.

For lack of the dynamicity of the HE SST operation and the lack of the mechanism for negotiation and operation management between the AP and the non-AP STA in the current dynamic subband method, the present disclosure provides a method for dynamic subchannel (subband) operation (DSO) mode management.

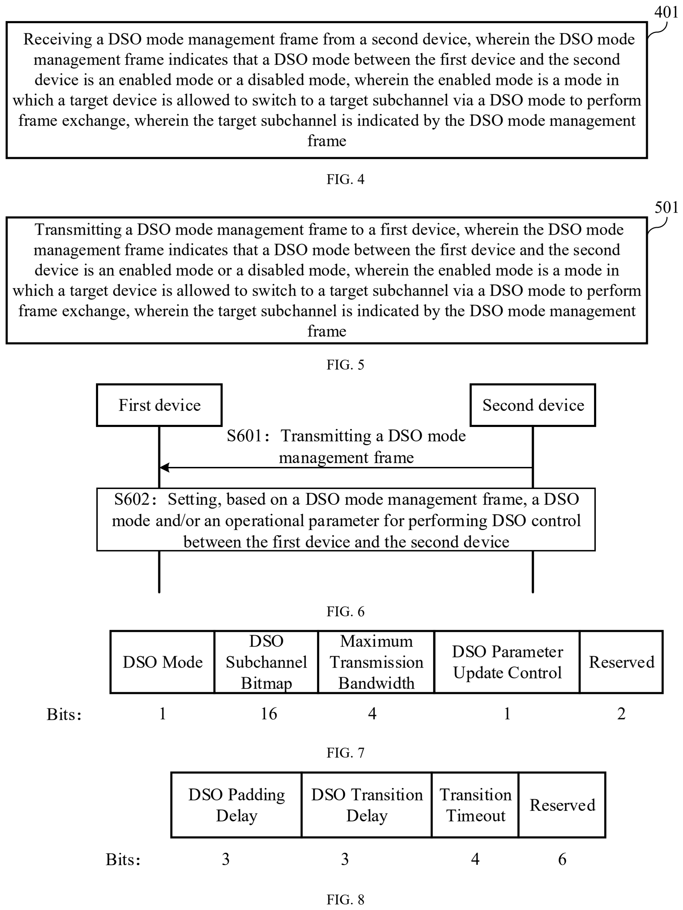

FIG. 4 is a flowchart of a method for channel operation according to some embodiments of the present disclosure. The method is performed by a first device. The first device is the station 10 or the access point 20 in the network architecture illustrated in FIG. 1. The method includes the following process.

In S401, the first device receives a DSO mode management frame from a second device.

The DSO mode management frame is configured to indicate that a DSO mode between the first device and the second device is an enabled mode or a disabled mode. The enabled mode is a mode in which a target device is allowed to switch to a target subchannel via a DSO mode to perform frame exchange, wherein the target subchannel is indicated by the DSO mode management frame.

In summary, in the technical solution according to the embodiments of the present disclosure, the first device that supports the DSO receives the DSO mode management frame from the second device to negotiate whether to allow the target device in the two devices to switch to the target subchannel via the DSO mode to perform frame exchange. In the method, a negotiation mechanism for the DSO is proposed, such that the opportunity and the subchannel for the frame exchange based on the DSO between the first device and the second device are controllable, the flexibility of the DSO mechanism is improved, and the communication effect of the frame exchange based on the DSO is further improved.

FIG. 5 is a flowchart of a method for channel operation according to some embodiments of the present disclosure. The method is performed by a second device. The second device is the station 10 or the access point 20 in the network architecture illustrated in FIG. 1. The method includes the following process.

In S501, the second device transmits a DSO mode management frame to a first device.

The DSO mode management frame indicates that a DSO mode between the first device and the second device is an enabled mode or a disabled mode. The enabled mode is a mode in which a target device is allowed to switch to a target subchannel via a DSO mode to perform frame exchange, wherein the target subchannel is indicated by the DSO mode management frame.

In summary, in the technical solution according to the embodiments of the present disclosure, the second device that supports the DSO transmits the DSO mode management frame to the first device to negotiate whether to allow the target device in the two devices to switch to the target subchannel via the DSO mode to perform frame exchange. In the method, a negotiation mechanism for the DSO is proposed, such that the opportunity and the subchannel for the frame exchange based on the DSO between the first device and the second device are controllable, the flexibility of the DSO mechanism is improved, and the communication effect of the frame exchange based on the DSO is further improved.

FIG. 6 is a flowchart of a method for channel operation according to some embodiments of the present disclosure. The method is performed based on interaction between a first device and a second device. The first device and the second device are respectively the station 10 or the access point 20 in the network architecture illustrated in FIG. 1. The method includes the following process.

In S601, the second device transmits a DSO mode management frame to the first device, and the first device receives the DSO mode management frame.

The DSO mode management frame indicates that a DSO mode between the first device and the second device is an enabled mode or a disabled mode. The enabled mode is a mode in which a target device is allowed to switch to a target subchannel via a DSO mode to perform frame exchange, wherein the target subchannel is indicated by the DSO mode management frame.

In some embodiments, the target device is at least one of the first device or the second device.

The first device is an AP device, and the second device is a non-AP device. Alternatively, the first device is a non-AP device, and the second device is an AP device.

The target device is an AP device, a non-AP device, or a combination thereof.

In the technical solutions, the effect of the enabled mode is expanded to the AP device and/or the non-AP device, such that the effect range of the enabled mode is enlarged, and the flexibility of the DSO mechanism is further improved.

In some embodiments, the disabled mode is a mode in which the target device is not allowed to perform frame exchange via the DSO mode; or the disabled mode is a mode in which the target device is not allowed to switch to the target subchannel via the DSO mode to perform the frame exchange.

In the disabled mode, the target device does not perform the frame exchange via the DSO mode. For example, using an example where the target device is a non-AP device, in a case where the non-AP device is in the disabled mode and the AP device gains the TXOP, the AP device does not indicate that the non-AP device switches to the subchannel via the DSO mode to perform the frame exchange. For example, the AP device does not transmit a DSO initial control frame to the non-AP device.

Alternatively, in the disabled mode, the target device does not switch to the target subchannel via the DSO mode to perform the frame exchange. In some embodiments, the target device switches to a subchannel other than the target subchannel via the DSO mode to perform the frame exchange. For example, the using an example where the target device is a non-AP device, in a case where the non-AP device is in the disabled mode and the AP device gains the TXOP on the target subchannel, the AP device does not indicate that the non-AP device switches to the target subchannel via the DSO mode to perform the frame exchange. For example, the AP device does not transmit a DSO initial control frame to the non-AP device in a case where the AP device gains the TXOP on the target subchannel; and the AP device indicates that the non-AP device switches to another subchannel via the DSO mode to perform the frame exchange in a case where the AP device gains the TXOP on a subchannel other than the target subchannel.

In above technical solution, the frame exchange between the AP device and/or the non-AP device via the DSO mode in the disabled mode is avoided/limited by negotiating the disabled mode, the opportunity and the subchannel for the frame exchange based on the DSO between the first device and the second device are controllable, the flexibility of the DSO mechanism is improved, and the communication effect of the frame exchange based on the DSO is further improved.

In some embodiments, the operation of the station that supports the DSO is categorized into two modes: entering the DSO mode (that is, an enabled DSO operation mode) and exiting the DSO mode (that is, an disabled DSO operation mode).
1) In the enabled DSO operation mode, the AP is in communication with the non-AP STA via the DSO mode, that is, the AP is in communication with the non-AP STA by dynamically using the secondary channel and/or the primary channel configured or indicated by the DSO within the TXOP period upon gaining the TXOP of the secondary channel.
2) In the disabled DSO operation mode, the AP is in communication with the non-AP STA via a conventional operation channel (the primary channel and/or part of secondary channels) of the non-AP STA, other than the secondary channel and/or the primary channel configured or indicated by the DSO.

In some embodiments, the non-AP STA or the AP associated with the non-AP STA initiates negotiation or notification for the DSO operation mode. The negotiation or notification includes one or more negotiation or notification contents, that is, transition (that is, transition from the enabled DSO operation mode to the disabled DSO operation mode, or transition from the disabled DSO operation mode to the enabled DSO operation mode) of the DSO operation mode of the station (for example, the non-AP STA), and/or setup or update of the operational parameter for performing the DSO (including the DSO subchannel/subband indication, the maximum TX bandwidth, the transition delay between different operational subchannels/subbands required by the station, and the like).

Based on the dynamic subchannel (or subband) operation (DSO) mode management method, it is ensured that the DSO operation satisfies the communication behavior requirement of the AP and the non-AP STA and complies with the channel condition and the QoS parameter requirement of the AP and the non-AP STA (especially the non-AP STA) in the secondary channel.

In S602, the first device and/or the second device sets, based on the DSO mode management frame, the DSO mode and/or an operational parameter for performing a DSO operation between the first device and the second device.

The DSO mode includes a DSO disabled mode and a DSO enabled mode.

The operational parameter for performing a DSO operation is used in the frame exchange via the DSO mode by the target device.

In the technical solutions, upon negotiation, the first device and/or the second device sets the DSO mode and/or an operational parameter for performing a DSO operation locally, such that the opportunity and the subchannel for the frame exchange based on the DSO between the first device and the second device are controllable via the DSO mode and/or the operational parameter for performing the DSO operation.

The DSO mode management frame is a DSO mode notification frame. Correspondingly, the first device transmits the DSO mode notification frame as a response to the second device within a timeout duration upon receiving the DSO mode notification frame.

In a case where the DSO mode management frame is a DSO mode notification frame, the second device receives the DSO mode notification frame transmitted as a response by the first device within the timeout duration upon transmitting the DSO mode notification frame, and sets, based on the DSO mode management frame, the DSO mode and/or the operational parameter for performing the DSO operation between the first device and the second device.

Alternatively, the second device sets, based on the DSO mode management frame, the DSO mode and/or the operational parameter for performing the DSO operation between the first device and the second device upon arrival of a timeout duration in response to not receiving the DSO mode notification frame transmitted as a response by the first device within the timeout duration upon transmitting the DSO mode notification frame.

In the embodiments, the negotiation of the DSO mode and/or the operational parameter for performing the DSO operation is achieved via the transmission and feedback mechanism using the notification frame, and an implementable solution for negotiating the DSO mode and/or the operational parameter for performing the DSO operation between the AP device and the non-AP device is proposed. In the solution, it is unnecessary to determine whether to accept the DSO mode and/or the operational parameter for performing the DSO operation notified by the initiator, and only the DSO mode and/or the operational parameter for performing the DSO operation is set based on information in the notification frame. Similarly, regardless of whether the initiator receives the transmitted notification frame, the initiator directly sets the DSO mode and/or the operational parameter for performing the DSO operation. The implementation logic of the process is simple, and the negotiation efficiency is high.

In some embodiments, the DSO mode management frame is a DSO mode request frame. Setting, by the first device and based on the DSO mode management frame, the DSO mode and/or the operational parameter for performing the DSO operation between the first device and the second device includes:
setting, based on the DSO mode request frame, the DSO mode and/or the operational parameter for performing the DSO operation between the first device and the second device in response to determining to accept the DSO mode and/or the operational parameter for performing the DSO operation that is indicated by the DSO mode request frame.

The method further includes: transmitting, by the first device, a first DSO mode response frame as a response to the second device. The first DSO mode response frame indicates whether to accept the DSO mode and/or the operational parameter for performing the DSO operation that is indicated by the DSO mode request frame.

The first DSO mode response frame includes a first status code. The first status code indicates whether to accept the DSO mode and/or the operational parameter for performing the DSO operation that is indicated by the DSO mode request frame.

In a case where the DSO mode management frame is a DSO mode request frame, setting, by the second device and based on the DSO mode management frame, the DSO mode between the first device and the second device includes:
receiving a first DSO mode response frame transmitted as a response by the first device, wherein the first DSO mode response frame indicates whether to accept the DSO mode and/or the operational parameter for performing the DSO operation that is indicated by the DSO mode request frame; and
setting, based on the DSO mode request frame, the DSO mode and/or the operational parameter for performing the DSO operation between the first device and the second device in a case where the first DSO mode response frame indicates acceptance of the DSO mode and/or the operational parameter for performing the DSO operation that is indicated by the DSO mode request frame.

In the embodiments, the negotiation of the DSO mode and/or the operational parameter for performing the DSO operation is achieved via the request and response mechanism using the request frame, and an implementable solution for negotiating the DSO mode and/or the operational parameter for performing the DSO operation between the AP device and the non-AP device is proposed. In the solution, the receiver determines whether to accept the DSO mode and/or the operational parameter for performing the DSO operation that is notified by the initiator. In the process, the flexibility of setup of the negotiation process of the DSO mode and/or the operational parameter for performing the DSO operation is higher, and the negotiation effect is greater.

The method further includes: transmitting, by the first device, an unsolicited second DSO mode response frame to the second device, wherein the second DSO mode response frame indicates a recommended DSO mode and/or a recommended operational parameter for performing the DSO operation.

In some embodiments, the second DSO mode response frame includes a second status code, and the second status code indicates that the second DSO mode response frame is configured to recommend the DSO mode and/or the operational parameter for performing the DSO operation.

The method further includes: receiving, by the second device, an unsolicited second DSO mode response frame from the first device, wherein the second DSO mode response frame indicates a recommended DSO mode and/or a recommended operational parameter for performing the DSO operation.

Accordingly, transmitting, by the second device, the DSO mode management frame to the first device includes: transmitting, by the second device, the DSO mode management frame to the first device based on the second DSO mode response frame.

In the embodiments, in a case where the DSO mode and/or the operational parameter for performing the DSO operation is negotiated using the request and response mechanism of the request frame, the receiver pre-recommends the DSO mode and/or the operational parameter for performing the DSO operation to the requester, such that the requester determines to negotiate which DSO mode and/or which operational parameter for performing the DSO operation based on the recommendation of the receiver, the success rate of the negotiation of the DSO mode and/or the operational parameter for performing the DSO operation is improved, and the negotiation efficiency is improved.

In some embodiments, the DSO mode management frame includes at least one of a DSO Mode Control field and a DSO Parameter Update field.

The DSO Mode Control field is configured to control the DSO mode between the first device and the second device, and the DSO Parameter Update field is configured to update an operational parameter for performing DSO operation between the first device and the second device.

In some embodiments, the second DSO mode response frame includes at least one of a DSO Mode Control field and a DSO Parameter Update field.

The DSO Mode Control field is configured to control the DSO mode between the first device and the second device, and the DSO Parameter Update field is configured to update the operational parameter for performing DSO operation between the first device and the second device.

In the embodiments, the frame structures of the DSO mode management frame and the second DSO mode response frame are defined, and the DSO mode and the operational parameter for performing DSO operation are carried in different pieces of information, such that the flexibility of the information carried in the DSO mode management frame and the second DSO mode response frame is improved.

In some embodiments, the DSO Mode Control field includes at least one of a DSO Mode subfield, a DSO Subchannel Bitmap subfield, a Maximum Transmission Bandwidth subfield, or a DSO Parameter Update Control field.

The DSO Mode subfield is configured to indicate a DSO mode to be transitioned to; the DSO Subchannel Bitmap subfield is configured to indicate the target subchannel via a bitmap; the Maximum Transmission Bandwidth subfield is configured to indicate a maximum permitted PPDU bandwidth for reception or transmission on the target subchannel; and the DSO Parameter Update Control field is configured to indicate whether the DSO Parameter Update field is present in a current frame.

In the embodiments, the frame structure of the DSO Mode Control field is defined, and the DSO mode to be transitioned to, the target subchannel, the maximum bandwidth, and information indicating whether to update the DSO parameter are carried in different subfields, such that the flexibility of the information carried in the DSO Mode Control field is improved.

In some embodiments, in a case where a parameter value in the DSO Mode subfield is a first parameter value, the DSO Mode subfield indicates that the DSO mode to be transitioned to is the enabled mode; or in a case where a parameter value in the DSO Mode subfield is a second parameter value, the DSO Mode subfield indicates that the DSO mode to be transitioned to is the disabled mode.

The first parameter value and the second parameter value are one of 1 and respectively. For example, the first parameter value is 0, and the second parameter value is 1. Alternatively, the first parameter value is 1, and the second parameter value is 0.

In the embodiments, different DSO modes are indicated by different parameters, such that the requirement for the signaling resource is reduced, and the negotiation efficiency is improved.

In some embodiments, the DSO Parameter Update field includes at least one of a DSO Mode Padding Delay subfield or a DSO Transition Delay subfield.

The DSO Mode Padding Delay subfield is configured to indicate a minimum medium access control (MAC) padding duration of a channel transition indication frame, wherein the channel transition indication frame is configured to trigger the target device to transition to the target subchannel via the DSO mode to perform the frame exchange; and the DSO Transition Delay subfield is configured to indicate a transition delay for transitioning from the target subchannel to a conventional subchannel.

The channel transition indication frame includes a channel transition control frame.

In the embodiments, the format of the DSO Parameter Update field is defined, and the padding duration of the channel switch indication frame and the delay for switch of the subchannel are indicated, such that the flexibility of the frame exchange via the DSO mode by the target device indicated by the channel switch indication frame is improved.

In some embodiments, in a case where the DSO mode management frame is a DSO mode notification frame, the DSO Parameter Update field includes a Switch Timeout subfield.

The Switch Timeout subfield is configured to indicate a timeout duration of transmitting the DSO mode notification frame as a response from the first device to the second device upon receiving the DSO mode notification frame.

In the embodiments, the negotiation via the notification frame and the format of the DSO Parameter Update field are defined, and the a timeout duration of transmitting the DSO mode notification frame as a response in negotiation of the notification frame between the first device and the second device is adjustable, such that the flexibility of the negotiation of the DSO mode and the operational parameter for performing the DSO operation is improved.

In the embodiments of the present disclosure, transition of the DSO mode and/or parameter update are achieved in the following two methods.
1. The transition of the DSO mode and/or the parameter update are achieved based on the notification frame.

In a case where a station (or an AP associated with the station) that supports the DSO starts to initiate the transition of the DSO mode and/or the parameter update of the DSO of the station, the station transmits the DSO mode notification frame to the associated AP (or the associated AP transmits the DSO mode notification frame to the station). In a case where the DSO Mode subfield takes a value of 1, the DSO mode of the station is enabled; and in a case where the DSO Mode subfield takes a value of 0, the DSO mode of the station is disabled.

Upon receiving the DSO mode notification frame from the station (or the station receives the DSO mode notification frame from the AP), the AP (or the station) transmits the DSO mode notification frame with a DSO Mode Control field and/or a DSO Parameter Update field (if present) that takes the same values as the received DSO Mode Control field and/or DSO Parameter Update field (if present) to the station within a transition timeout duration indicated by the DSO Switch Timeout subfield.

In a case where the station initiates the transition of the DSO mode and/or the parameter update of the DSO, the station enters the operation mode (the enabled DSO mode or the disabled DSO mode) indicated by the DSO Mode subfield upon the transition timeout duration indicated by the DSO Switch Timeout subfield (carried by the station in a Capability field, a capability element, a DSO Parameter Update field) after successfully transmitting the DSO mode notification frame or upon receiving the DSO mode notification frame from the AP. That is, in a case where the DSO Mode subfield takes a value of 0, the station exits the DSO mode or the disabled DSO mode; and in a case where the DSO Mode subfield takes a value of 1, the station enters the DSO mode or the enabled DSO mode.

In a case where the AP initiates the transition of the DSO mode and/or the parameter update of the DSO of the station, the station enters the operation mode (the enabled DSO mode or the disabled DSO mode) indicated by the DSO Mode subfield upon the transition timeout duration indicated by the DSO Switch Timeout subfield (carried by the station in a Capability field, a capability element, a DSO Parameter Update field) after receiving the DSO mode notification frame or upon successfully transmitting the DSO mode notification frame to the AP. That is, in a case where the DSO Mode subfield takes a value of 0, the station exits the DSO mode or the disabled DSO mode; and in a case where the DSO Mode subfield takes a value of 1, the station enters the DSO mode or the enabled DSO mode.

In a case where the station enters (or enables) the DSO mode based on the interaction of the DSO mode notification frame, and the DSO mode notification frame contains the DSO Parameter Update field, after the station enters (or enables) the DSO mode, in communication between the AP and the station based on the DSO, the station performs the DSO operation using the supported channel indicated by the DSO subchannel bitmap, the maximum bandwidth indicated by the Maximum Transmission Bandwidth field, the minimum MAC padding duration indicated by the DSO Mode Padding Delay subfield, and the transition delay indicated by the DSO Transition Delay subfield.

2. The method for negotiating the DSO mode and/or the parameter update are achieved based on the request/response frame.

In a case where a station (or an AP associated with the station) that supports the DSO starts to initiate the transition of the DSO mode and/or the parameter update of the DSO of the station, the station transmits the DSO mode request frame to the associated AP (or the associated AP transmits the DSO mode request frame to the station). In the DSO mode request frame, in a case where the DSO Mode subfield takes a value of 1, the DSO mode of the station is requested to be enabled; and in a case where the DSO Mode subfield takes a value of 0, the DSO mode of the station is requested to be disabled (that is, exit). The DSO mode request frame further includes a DSO Subchannel Bitmap subfield for requesting the indicated DSO-supported channel, a Maximum Transmission Bandwidth subfield for requesting the indicated maximum bandwidth, a DSO Mode Padding Delay subfield for requesting the indicated minimum MAC padding duration, and a DSO Transition Delay subfield for requesting the indicated transition delay.

Upon receiving the DSO mode request frame from the station (or upon receiving the DSO mode request frame from the AP), the AP (or the station) transmits a DSO response frame to respond to the corresponding DSO mode request, and receives or refuses the corresponding DSO mode transition request and/or requests to update the DSO parameter.

Moreover, the AP or non-AP STA further transmits a DSO mode response frame with a status code indicating a "recommended DSO" or transmits a QoS null frame or other frames carrying the DSO Mode Control subfield and/or the DSO Parameter Update subfield in a HE Variant HT Control field to recommend the recommended DSO mode (that is, the enabled or disabled DSO mode) and/or the DSO parameter to the target station.

Related fields and frames of the DSO negotiation or notification are as follows.

### 1) Format of the DSO Mode Control field

FIG. 7 is a schematic diagram of a format of a DSO Mode Control field according to the embodiments of the present disclosure.

As illustrated in FIG. 7, the DSO Mode subfield indicates the operation mode to be transitioned to. In a case where the DSO Mode subfield takes a value of 0, the device exits the DSO mode or the disabled DSO mode; and in a case where the DSO Mode subfield takes a value of 1, the device enters the DSO mode or the enabled DSO mode.

The DSO Subchannel Bitmap subfield indicates a 16-bit bitmap, and provides information of a temporary channel within a DSO transmission period that is negotiated or notified by the station. Each bit in the bitmap corresponds to a minimum bandwidth channel within a current-operating frequency band of a BSS associated with a TWT responder STA. The least significant bit corresponds to a lowest numbered channel in operating channels of the BSS. In the HE BSS, the EHT BSS, or the UHR BSS, the minimum bandwidth channel is 20 MHz, and the least significant bit corresponds to the 20 MHz subchannel within the BSS bandwidth and has the lowest frequency in all 20 MHz subchannels in the BSS bandwidth. Each bit in the bitmap corresponds to a subchannel with the next higher-frequency bandwidth being the minimum bandwidth channel (for example, 20 MHz). The bits within the BSS bandwidth in the bitmap are set to 1 to indicate that the subchannel with corresponding bandwidth being the minimum bandwidth channel (for example, 20 MHz) is expected or allowed to be determined as a temporary channel for operation. The bits within the BSS bandwidth in the bitmap are set to 0 to indicate that the subchannel with corresponding bandwidth being the minimum bandwidth channel (for example, 20 MHz) is not expected or allowed to be determined as a temporary channel for operation. Specifically, subchannels that all bits in the DSO Subchannel Bitmap subfield are set to 1 and are determined as the temporary channels are contiguous subchannels or non-contiguous subchannels. In a case where transmission and reception are performed simultaneously on several non-contiguous subchannels indicated by the DSO Subchannel Bitmap subfield, the communication rules based on the punctured subchannel and/or the punctured PPDU should be satisfied.

The Maximum Transmission Bandwidth subfield indicates the maximum permitted PPDU bandwidth for reception or transmission on the target subchannel for the station. The indicated maximum PPDU bandwidth may not exceed the maximum bandwidth supported by the station.

The DSO Parameter Update Control subfield is configured to indicate whether the DSO Parameter Update field is present in a current frame. In a case where the DSO Parameter Update Control field takes a value of 1, the management frame carrying the DSO Mode Control field includes the DSO Parameter Update field; or in a case where the DSO Parameter Update Control field takes a value of 0, the management frame carrying the DSO Mode Control field does not include the DSO Parameter Update field.

### 2) Format of the DSO Mode Parameter Update field

FIG. 8 is a schematic diagram of a format of a DSO Parameter Update field according to the embodiments of the present disclosure.

The DSO Mode Padding Delay subfield indicates the minimum MAC padding duration requested or notified by the station for the subchannel switch control frame configured to indicate the DSO subchannel switch. The minimum MAC padding duration ensures that the station performing the DSO has a sufficient duration to switch between different subchannels for the operation upon receiving the DSO subchannel switch indication. In a case where the DSO Mode Padding Delay subfield is carried in the management frame from the AP, and is reserved. The definition of the DSO Mode Padding Delay subfield is listed in Table 1.

**Table 1**

| DSO Mode Padding Delay subfield | DSO Mode Padding Delay |
|---|---|
| 0 | 0 µs |
| 1 | 32 µs |
| 2 | 64 µs |
| 3 | 128 µs |
| 4 | 256 µs |
| 5-7 | Reserved |

The DSO Transition Delay subfield indicates a delay required for the transition from frame exchange on the DSO subchannel to a monitoring or transmission/reception operation on the conventional subchannel. The definition of the DSO Transition Delay subfield is listed in Table 2.

**Table 2**

| DSO Transition Delay Subfield | DSO Transition Delay |
|---|---|
| 0 | 0 µs |
| 1 | 16 µs |
| 2 | 32 µs |
| 3 | 64 µs |
| 4 | 128 µs |
| 5 | 256 µs |
| 6-7 | Reserved |

The Switch Timeout subfield indicates the timeout value for exchange of the DSO mode notification frame for transition of the DSO mode and/or parameter update of the DSO, and the encoding is listed in Table 3.

**Table 3**

| Switch Timeout subfield | Transition timeout |
|---|---|
| 0 | 0 TUs |
| 1 | 128 µs |
| 2 | 256 µs |
| 3 | 512 µs |
| 4 | 1 TU |
| 5 | 2 TUs |
| 6 | 4 TUs |
| 7 | 8 TUs |
| 8 | 16 TUs |
| 9 | 32 TUs |
| 10 | 64 TUs |
| 11 | 128 TUs |
| 12-15 | Reserved |

### 3) Format of the DSO mode notification frame and request frame/response frame

### (1) DSO mode notification frame

The DSO mode notification frame indicates that the station (initiator) initiating to transmit the frame changes the DSO mode. That is, the station enters or exits the DSO mode.

Information in the DSO mode notification frame is listed in Table 4.

**Table 4**

| Order | Information |
|---|---|
| 1 | Category |
| 2 | Protected Action |
| 3 | Dialog Token |
| 4 | DSO Mode Control field |
| 5 | DSO Parameter Update field (optional) |

The Category field follows the relevant definitions of the Action field in IEEE 802.11.

The Protected Action field follows the relevant definitions of the Protected Action field in IEEE 802.11.

The Dialog Token field is set by the non-AP MLD to a non-zero value selected by the non-AP MLD, and is also set by the AP to the value of the corresponding duplication of the received DSO mode notification frame.

For the DSO Mode Control field, reference may be made to the definition in above "format of the DSO Mode Control field."

For the DSO Mode Parameter Update field, reference may be made to above "format of the DSO Mode Parameter Update field."

### (2) DSO mode request frame

A station (an AP or a non-AP station) negotiate the DSO mode with the corresponding station (the corresponding non-AP station and AP) using the DSO mode request frame. The information in the Action field of the DSO mode request frame is listed in Table 5.

**Table 5**

| Order | Information |
|---|---|
| 1 | Category |
| 2 | Protected Action |
| 3 | Dialog Token |
| 4 | DSO Mode Control field |
| 5 | DSO Parameter Update field (optional) |

The Category field follows the relevant definitions of the Action field in IEEE 802.11.

The Protected Action field follows the relevant definitions of the Protected Action field in IEEE 802.11.

The Dialog Token field is set by the station transmitting the DSO mode request frame to a non-zero value to mark the request/response traffic.

For the DSO Mode Control field, reference may be made to the definition in above "format of the DSO Mode Control field."

For the DSO Mode Parameter Update field, reference may be made to above "format of the DSO Mode Parameter Update field."

### (3) DSO mode response frame

The DSO mode response frame is transmitted by the non-AP station or the AP to respond to the DSO mode request frame to receive or refuse the requested DSO mode, or is transmitted by the non-AP station or the AP to recommend a DSO mode. The information in the Action field of the DSO mode request frame is listed in Table 6.

**Table 6**

| Order | Information |
|---|---|
| 1 | Category |
| 2 | Protected Action |
| 3 | Dialog Token |
| 4 | Status Code |
| 4 | DSO Mode Control field |
| 5 | DSO Parameter Update field (optional) |

The Category field follows the relevant definitions of the Action field in IEEE 802.11.

The Protected Action field follows the relevant definitions of the Protected Action field in IEEE 802.11.

In a case where the DSO mode response frame is configured to respond to the DSO mode request frame, the Dialog Token field takes a value of the value of the Dialog Token field in the DSO mode request frame.

In a case where the DSO mode response frame is transmitted as an unsolicited response, the Dialog Token field takes a value of 0.

The Status Code field is listed in Table 7.

**Table 7**

| Status Code | Name | Meaning |
|---|---|---|
| 0 (or other values) | ACCEPT | Accept the request |
| 202 (or other values) | DENIED_DYNAMIC_SUBCHANNLE_OPERATION | Refuse the request (as the DSO mode request is not accepted) |
| 203 (or other values) | PREFERRED_DYNAMIC_SUBCHANNLE_OPERATION | The recommended DSO mode |

In a case where the DSO mode response frame includes the DSO Mode Control field and/or the DSO Parameter Update field, the response frame is configured to recommend the recommended DSO mode and/or the DSO parameter, and the status code is set to "203 or other values (PREFERRED_DYNAMIC_SUBCHANNLE_OPERATION)"; otherwise, the DSO mode response frame does not include the DSO Mode Control field and the DSO parameter.

In a case where the first device is a non-AP device, and the second device is an AP device, the first device receives the channel switch indication frame from the second device when the DSO mode between the first device and the second device is enabled; and switches to the target subchannel to perform frame exchange with the second device. In some embodiments, upon the frame exchange with the second device on the target subchannel, the first device switches to the conventional subchannel to perform frame exchange with the second device within the switch delay indicated by the DSO mode management frame.

The conventional subchannel is a subchannel used in the frame exchange between the AP device and the non-AP device not based on the DSO mode. For example, the conventional subchannel includes the primary channel of the AP device.

Correspondingly, in a case where the first device is a non-AP device, and the second device is an AP device, the second device transmits the channel switch indication frame to the first device when the DSO mode between the first device and the second device is enabled; and switches to the target subchannel to perform frame exchange with the first device.

In a case where the first device is an AP device, and the second device is a non-AP device, the first device transmits the channel switch indication frame to the second device in a case where the DSO mode between the first device and the second device is enabled; and switches to the target subchannel to perform frame exchange with the second device.

Correspondingly, in a case where the first device is an AP device, and the second device is a non-AP device, the second device receives the channel switch indication frame from the first device in a case where the DSO mode between the first device and the second device is enabled; and switches to the target subchannel to perform frame exchange with the first device.

In a case where the first device is an AP device, and the second device is a non-AP device, upon the frame exchange with the first device on the target subchannel, the second device switches to the conventional subchannel to perform frame exchange with the first device within the switch delay indicated by the DSO mode management frame.

In the above embodiments, upon successfully gaining the XTOP on the target subchannel, the AP device transmits the channel switch indication frame to the non-AP device based on the information indicated by the DSO mode management frame. The non-AP device performs the frame exchange based on the DSO mode according to the channel switch indication frame and the information indicated by the DSO mode management frame. In the technical solutions, the frame exchange between the first device and the second device based on the DSO mode is controlled by the DSO mode management frame, such that the controllability of the opportunity and method of the frame exchange between the first device and the second device based on the DSO mode is ensured.

In some embodiments, a frame tail of the channel switch indication frame includes a padding element, and a duration corresponding to the padding element is not less than a MAC padding duration indicated by the DSO mode management frame.

The MAC padding duration of the padding element allows the non-AP device to initiate the switch of the subchannel in receiving the channel switch indication frame, such that there is a sufficient duration to switch to the target subchannel before the end of the next frame interval, and the subsequent frame exchange process is not affected.

In some embodiments, the PPDU bandwidth for performing the frame exchange on the target subchannel with the second device is not greater than a maximum PPDU bandwidth indicated by the DSO mode management frame.

In the above embodiments, the PPDU bandwidth for performing the frame exchange between the first device and the second device based on the DSO mode is managed via the DSO mode management frame, such that the controllability of the frame exchange between the first device and the second device based on the DSO mode is improved.

### Embodiments of transition of the DSO mode and parameter update based on the notification frame

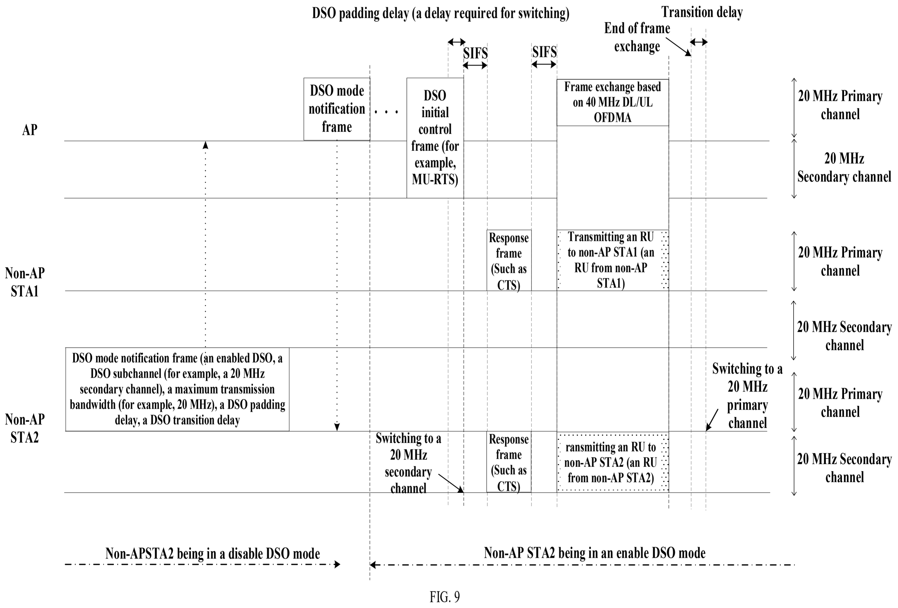

FIG. 9 is a schematic diagram of transition of a DSO mode and parameter update based on a notification frame according to some embodiments of the present disclosure. As illustrated in FIG. 9, non-AP STA1 and non-AP STA2 are 20 MHz-only terminals and are associated with the AP. The BSS of the AP operates on a 40 MHz bandwidth including the 20 MHz primary channel and the 20 MHz secondary channel. Meanwhile, the AP supports the DSO operation, and the conventional operation channel of non-AP STA2 is the 20 MHz primary channel. Non-AP STA2 supports the DSO, and non-AP STA2 dynamically transitions, in a case where the DSO mode is enabled, to the designated channel based on the DSO indication transmitted by the AP to perform the frame exchange.

Non-AP STA2 is in the disabled DSO mode initially, and only operates on the conventional channel (that is, the 20 MHz primary channel) and may not perform the DSO operation. Then, non-AP STA2 initiates transition of the DSO mode and parameter update of the DSO by transmitting the DSO mode notification frame to the AP. The notification frame indicates the enabled DSO, the DSO subchannel (that is, the 20 MHz secondary channel), the maximum transmission bandwidth that is, 20 MHz), the DSO padding delay (for example, 128 µs), the DSO transition delay (128 µs), and the transition timeout (1 TU). Upon receiving the DSO mode notification frame from the AP, the AP transmits the DSO mode notification frame to Non-AP STA2 within the transition timeout duration (1 TU) indicated by the received DSO Switch Timeout subfield. Upon receiving the DSO mode notification frame from the AP, non-AP STA2 enters the DSO mode.

Upon enabling the DSO mode (or entering the DSO mode), non-AP STA2 operates on the conventional channel (i.e., the 20 MHz primary channel) or on the DSO subchannel (i.e., the 20 MHz secondary channel). Upon gaining the TXOP on the 20 MHz primary channel and the 20 MHz secondary channel, the AP transmits a DSO initial control frame (e.g., a multi-user request-to-send (MU-RTS) frame) to non-AP STA2 to instruct non-AP STA2 to switch to the DSO subchannel (i.e., the 20 MHz secondary channel). Meanwhile, the DSO initial control frame carries a sufficient padding delay to ensure the delay required for switch of non-AP STA2 from the conventional channel (i.e., the 20 MHz primary channel) to the DSO subchannel (i.e., the 20 MHz secondary channel). The DSO initial control frame is transmitted using a 40 MHz non-HT duplicate PPDU. Upon receiving the DSO transition indication in the DSO initial control frame, non-AP STA2 switches to the 20 MHz secondary channel and transmits a response frame (for example, a clear-to-send (CTS) frame) as a response. Then, the AP performs the frame exchange based on 40 MHz DL/UL OFDMA with non-AP STA1 and non-AP STA2. Non-AP STA2 performs the frame exchange with the AP on an RU located on the allocated 20 MHz secondary channel, and non-AP STA1 performs the frame exchange with the AP on an RU located on the allocated 20 MHz primary channel. In a case where non-AP STA2 detects the end of the frame exchange, non-AP STA2 switches to the conventional channel (that is, the 20 MHz primary channel) upon the DSO transition delay (128 µs).

Specifically, in a case where the AP triggers a plurality of non-AP stations (non-AP STAs) in the enabled DSO mode within the gained TXOP to perform communication based on the DSO, the padding duration of the initial DSO control frame transmitted by the AP is greater than or equal to a maximum padding duration in a plurality of minimum MAC padding durations requested by the plurality of non-AP stations in the enabled DSO mode that are to triggered.

### Embodiments of transition of the parameter update of the DSO based on the notification frame

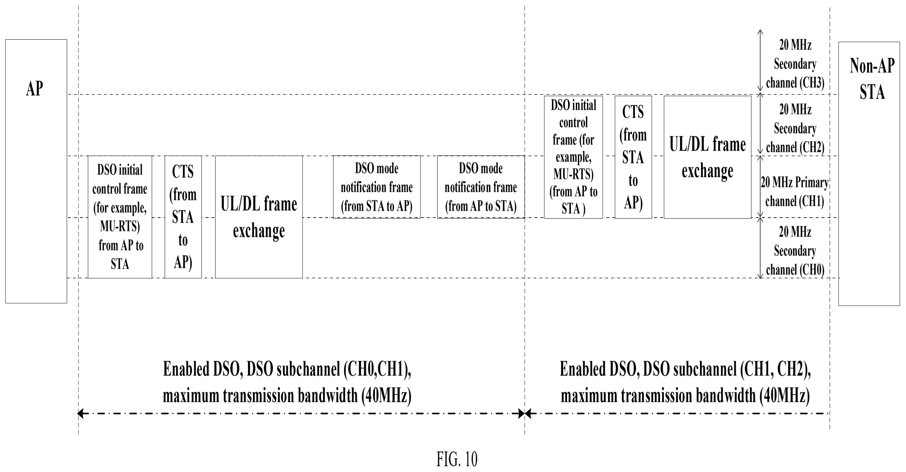

FIG. 10 is a schematic diagram of parameter update of a DSO based on a notification frame according to some embodiments of the present disclosure. As illustrated in FIG. 10, the non-AP STA is a terminal that supports a 40 MHz bandwidth and are associated with the AP. The BSS of the AP operates on an 80 MHz bandwidth including one 20 MHz primary channel and three 20 MHz secondary channels. Meanwhile, the AP supports the DSO operation, the conventional operation channel of the non-AP STA is the 20 MHz primary channel, and the conventional operation bandwidth of the non-AP STA is 20 MHz (for example, the bandwidth is reduced to for power saving). Non-AP STA2 supports the DSO, and dynamically switches, in a case where the DSO mode is enabled, to the designated channel based on the DSO indication transmitted by the AP to perform the frame exchange.

Non-AP STA2 is in the enabled DSO mode initially, and operates on the conventional channel (i.e., the 20 MHz primary channel) and the DSO subchannel (including 20 MHz primary channel CH1 and 20 MHz secondary channel CH0, with the maximum transmission bandwidth being 40 MHz).

Upon gaining the TXOP on 20 MHz primary channel CH1 and 20 MHz secondary channel CH0, the AP transmits a DSO initial control frame (e.g., a MU-RTS frame) to the non-AP STA to instruct the non-AP STA to switch to the DSO subchannel (i.e., 20 MHz primary channel CH1 and 20 MHz secondary channel CH0). Meanwhile, the DSO initial control frame carries a sufficient padding delay to ensure the delay required for switch of the non-AP STA from the conventional channel (i.e., the 20 MHz primary channel) to the DSO subchannel (i.e., 20 MHz primary channel CH1 and 20 MHz secondary channel CH0). Upon receiving the DSO transition indication in the DSO initial control frame, the non-AP STA switches to 20 MHz primary channel CH1 and 20 MHz secondary channel CH0 and transmits a response frame (e.g.,, a CTS frame) as a response. Then, the AP performs the frame exchange with the non-AP STA on the DSO subchannel (i.e., 20 MHz primary channel CH1 and 20 MHz secondary channel CH0). In a case where the non-AP STA detects the end of the frame exchange, the non-AP STA switches to the conventional channel (i.e., the 20 MHz primary channel) upon the DSO transition delay.

Upon a duration, the non-AP STA initiates the parameter update of the DSO, that is, indicating the enabled DSO, by transmitting the DSO mode notification frame to the AP. The DSO subchannel is updated to 20 MHz primary channel CH1 and 20 MHz secondary channel CH2 and has a maximum transmission bandwidth (i.e., 40 MHz). Upon receiving the DSO mode notification frame from the non-AP STA, the AP transmits the DSO mode notification frame to the non-AP STA within the transition timeout duration indicated by the received DSO Transition subfield. Upon receiving the DSO mode notification frame from the AP, the non-AP STA performs the DSO operation using the updated DSO parameter. The non-AP STA operates on the conventional channel (i.e., 20 MHz primary channel) or operates on the DSO subchannel (including 20 MHz primary channel CH1 and 20 MHz secondary channel CH2, with the maximum transmission bandwidth being 40 MHz).

Upon gaining the TXOP on 20 MHz primary channel CH1 and 20 MHz secondary channel CH2, the AP transmits a DSO initial control frame (e.g., a MU-RTS frame) to the non-AP STA to instruct the non-AP STA to switch to the DSO subchannel (i.e., 20 MHz primary channel CH1 and 20 MHz secondary channel CH0). Meanwhile, the DSO initial control frame carries a sufficient padding delay to ensure the delay required for switch of the non-AP STA from the conventional channel (i.e., the 20 MHz primary channel) to the DSO subchannel (i.e., 20 MHz primary channel CH1 and 20 MHz secondary channel CH2). The DSO initial control frame is transmitted using a 40 MHz non-HT duplicate PPDU. Upon receiving the DSO transition indication in the DSO initial control frame, the non-AP STA switches to 20 MHz primary channel CH1 and 20 MHz secondary channel CH2, and transmits a response frame (e.g., a CTS frame) as a response. Then, the AP performs the frame exchange with the non-AP STA on the DSO subchannel (i.e., 20 MHz primary channel CH1 and 20 MHz secondary channel CH2). In a case where the non-AP STA detects the end of the frame exchange, the non-AP STA switches to the conventional channel (i.e., the 20 MHz primary channel) upon the DSO transition delay.

### Embodiments of negotiation of the DSO mode and parameter update based on the request/response frame

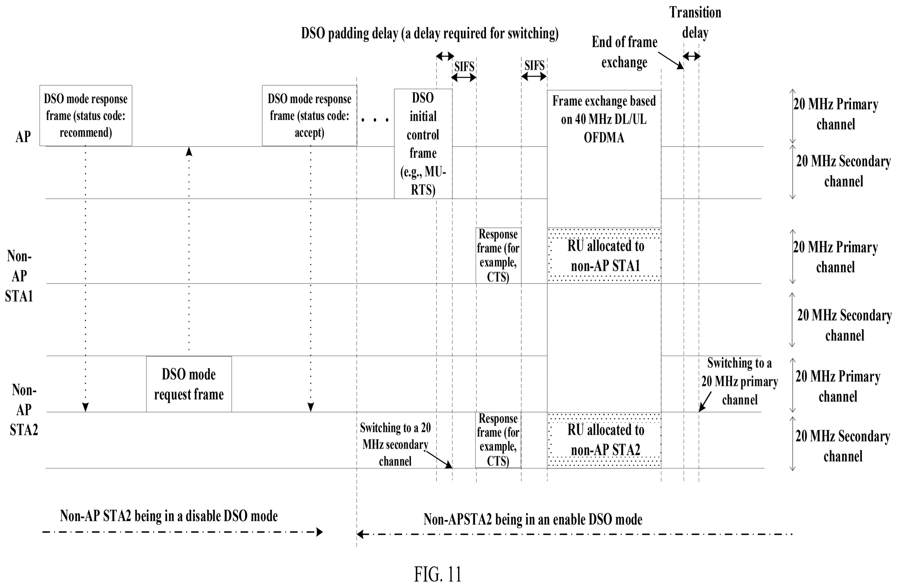

FIG. 11 is a schematic diagram of negotiation of a DSO mode and parameter update based on a request/response frame according to some embodiments of the present disclosure. As illustrated in FIG. 11, non-AP STA1 and non-AP STA2 are 20 MHz-only terminals and are associated with the AP. The BSS of the AP operates on a 40 MHz bandwidth including the 20 MHz primary channel and the 20 MHz secondary channel. Meanwhile, the AP supports the DSO, and the conventional operation channel of non-AP STA2 is the 20 MHz primary channel. Non-AP STA2 supports the DSO, and dynamically switches, in a case where the DSO mode is enabled, to the designated channel based on the DSO indication transmitted by the AP to perform the frame exchange.

Non-AP STA2 is in the disabled DSO mode initially, and only operates on the conventional channel (i.e., the 20 MHz primary channel) and may not perform the DSO operation. Then, the AP transmits an unsolicited DSO mode response frame to non-AP STA2 to recommend a recommended DSO mode and a DSO parameter, for example, indicate the enabled DSO, the DSO subchannel (i.e., the 20 MHz secondary channel), and the maximum transmission bandwidth (i.e., 20 MHz). Upon receiving the unsolicited DSO mode response frame from the AP, non-AP STA2 transmits a DSO mode request frame to initiate a request for transition of the DSO mode and parameter update of the DSO. The request frame indicates the enabled DSO, the DSO subchannel (i.e., the 20 MHz secondary channel), the maximum transmission bandwidth (i.e., 20 MHz), the DSO padding delay (e.g., 128 µs), the DSO transition delay (128 µs), and the transition timeout (1 TU). Upon receiving the DSO mode request frame from non-AP STA2, in a case where the AP accepts the DSO mode request, the AP transmits a DSO mode response frame with a status code of "accept" to non-AP STA2. Upon receiving the DSO mode response frame from the AP, non-AP STA2 enables the DSO mode.

Upon enabling the DSO mode (or entering the DSO mode), non-AP STA2 operates on the conventional channel (i.e., the 20 MHz primary channel) or on the DSO subchannel (i.e., the 20 MHz secondary channel). Upon gaining the TXOP on the 20 MHz primary channel and the 20 MHz secondary channel, the AP transmits a DSO initial control frame (e.g., an MU-RTS frame) to non-AP STA2 to instruct non-AP STA2 to switch to the DSO subchannel (i.e., the 20 MHz secondary channel). Meanwhile, the DSO initial control frame carries a sufficient padding delay to ensure the delay required for switch of non-AP STA2 from the conventional channel (i.e., the 20 MHz primary channel) to the DSO subchannel (i.e., the 20 MHz secondary channel). The DSO initial control frame is transmitted using a 40 MHz non-HT duplicate PPDU. Upon receiving the DSO transition indication in the DSO initial control frame, non-AP STA2 switches to the 20 MHz secondary channel, and transmits a response frame (e.g., a CTS frame) as a response. Then, the AP performs the frame exchange based on 40 MHz DL/UL OFDMA with non-AP STA1 and non-AP STA2. Non-AP STA2 performs the frame exchange with the AP on an RU located on the allocated 20 MHz secondary channel, and non-AP STA1 performs the frame exchange with the AP on an RU located on the allocated 20 MHz primary channel. In a case where non-AP STA2 detects the end of the frame exchange, non-AP STA2 switches to the conventional channel (i.e., the 20 MHz primary channel) upon the DSO transition delay (128 µs).

### Embodiments of negotiation of the DSO mode and parameter update based on the request/response frame

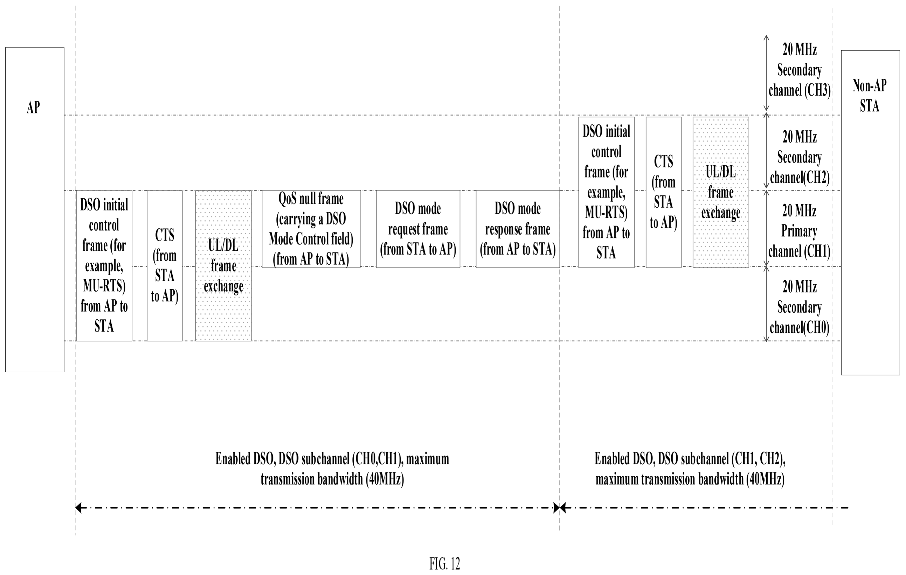

FIG. 12 is a schematic diagram of negotiation of a DSO mode and parameter update based on a request/response frame according to some embodiments of the present disclosure. As illustrated in FIG. 12, the non-AP STA is a terminal that supports a 40 MHz bandwidth and are associated with the AP. The BSS of the AP operates on an 80 MHz bandwidth including one 20 MHz primary channel and three 20 MHz secondary channels. Meanwhile, the AP supports the DSO operation, the conventional operation channel of the non-AP STA is the 20 MHz primary channel, and the conventional operation bandwidth of the non-AP STA is 20 MHz (e.g., the bandwidth is reduced to for power saving). Non-AP STA2 supports the DSO, and dynamically switches, in a case where the DSO mode is enabled, to the designated channel based on the DSO indication transmitted by the AP to perform the frame exchange.

Non-AP STA2 is in the enabled DSO mode initially, and operates on the conventional channel (i.e., the 20 MHz primary channel) and the DSO subchannel (including 20 MHz primary channel CH1 and 20 MHz secondary channel CH0, with the maximum transmission bandwidth being 40 MHz).

Upon gaining the TXOP on 20 MHz primary channel CH1 and 20 MHz secondary channel CH0, the AP transmits a DSO initial control frame (e.g., an MU-RTS frame) to the non-AP STA to instruct the non-AP STA to switch to the DSO subchannel (i.e., 20 MHz primary channel CH1 and 20 MHz secondary channel CH0). Meanwhile, the DSO initial control frame carries a sufficient padding delay to ensure the delay required for switch of the non-AP STA from the conventional channel (i.e., the 20 MHz primary channel) to the DSO subchannel (i.e., 20 MHz primary channel CH1 and 20 MHz secondary channel CH0). The DSO initial control frame is transmitted using a 40 MHz non-HT duplicate PPDU. Upon receiving the DSO transition indication in the DSO initial control frame, the non-AP STA switches to 20 MHz primary channel CH1 and 20 MHz secondary channel CH0, and transmits a response frame (e.g., a CTS frame) as a response. Then, the AP performs the frame exchange with the non-AP STA on the DSO subchannel (i.e., 20 MHz primary channel CH1 and 20 MHz secondary channel CH0). In a case where the non-AP STA detects the end of the frame exchange, the non-AP STA switches to the conventional channel (i.e., the 20 MHz primary channel) upon the DSO transition delay.

Upon a duration, the AP transmits a QoS null frame or other frames carrying the DSO Mode Control subfield and/or the DSO Parameter Update subfield in an HE Variant HT Control field to non-AP STA to recommend the recommended DSO mode and/or the DSO parameter to the target station, for example, indicates enable the enabled DSO, the DSO subchannel (primary channel CH1 and 20 MHz secondary channel CH2), or the maximum transmission bandwidth (that is, 40 MHz). Upon receiving the recommended DSO mode and the recommended operational parameter of the DSO, the non-AP STA initiates the parameter update of the DSO, i.e., indicating the enabled DSO, by transmitting the DSO mode request frame to the AP. The DSO subchannel is updated to 20 MHz primary channel CH1 and 20 MHz secondary channel CH2, and has a maximum transmission bandwidth (i.e., 40 MHz). Upon receiving the DSO mode notification frame from the non-AP STA, the AP transmits the DSO mode response frame as a response to the non-AP STA. Upon receiving the DSO mode notification frame from the AP, the non-AP STA performs the DSO operation using the updated DSO parameter. The non-AP STA operates on the conventional channel (i.e., 20 MHz primary channel) or operates on the DSO subchannel (including 20 MHz primary channel CH1 and 20 MHz secondary channel CH2, with the maximum transmission bandwidth being 40 MHz).

Upon gaining the TXOP on the 20 MHz primary channel CH1 and the 20 MHz secondary channel CH2, the AP transmits a DSO initial control frame (e.g., an MU-RTS frame) to the non-AP STA to instruct the non-AP STA to switch to the DSO subchannel (i.e., 20 MHz primary channel CH1 and 20 MHz secondary channel CH0). Meanwhile, the DSO initial control frame carries a sufficient padding delay to ensure the delay required for switch of the non-AP STA from the conventional channel (i.e., the 20 MHz primary channel) to the DSO subchannel (i.e., 20 MHz primary channel CH1 and 20 MHz secondary channel CH2). The DSO initial control frame is transmitted using a 40 MHz non-HT duplicate PPDU. Upon receiving the DSO transition indication in the DSO initial control frame, the non-AP STA switches to the 20 MHz primary channel CH1 and the 20 MHz secondary channel CH2, and transmits a response frame (e.g., a CTS frame) as a response. Then, the AP performs the frame exchange with the non-AP STA on the DSO subchannel (i.e., 20 MHz primary channel CH1 and 20 MHz secondary channel CH2). In a case where the non-AP STA detects the end of the frame exchange, the non-AP STA switches to the conventional channel (i.e., the 20 MHz primary channel) upon the DSO transition delay.

In the technical solutions according to the embodiments of the present disclosure, the dynamic subchannel (or subband) operation mode within a BSS is managed, or the dynamic subchannel (or subband) operation mode in multi-AP or multi-link operation scenarios is managed.

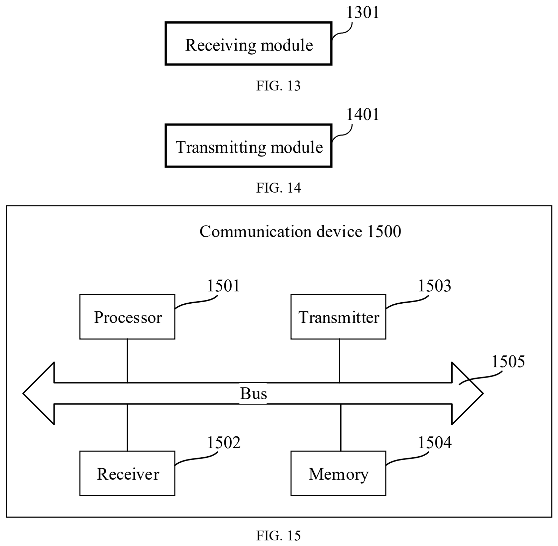

FIG. 13 is a block diagram of an apparatus for channel operation according to some embodiments of the present disclosure. The apparatus has the function of the process performed by the first device in the method for channel operation. As illustrated in FIG. 13, the apparatus includes: a receiving module 1301, configured to receive a DSO mode management frame from a second device, wherein the DSO mode management frame is configured to indicate that a DSO mode between the first device and the second device is an enabled mode or a disabled mode, wherein the enabled mode is a mode in which a target device is allowed to switch to a target subchannel via a DSO mode to perform frame exchange, wherein the target subchannel is indicated by the DSO mode management frame.

In some embodiments, the disabled mode is a mode in which the target device is not allowed to perform frame exchange via the DSO mode; or the disabled mode is a mode in which the target device is not allowed to switch to the target subchannel via the DSO mode to perform the frame exchange.

In some embodiments, the target device is at least one of the first device or the second device.

In some embodiments, the apparatus further includes a setting module, configured to set, based on the DSO mode management frame, the DSO mode and/or an operational parameter for performing a DSO operation between the first device and the second device.

In some embodiments, the DSO mode management frame is a DSO mode notification frame, and the apparatus further includes: a first transmitting module, configured to transmit the DSO mode notification frame as a response to the second device within a timeout duration upon receiving the DSO mode notification frame.

In some embodiments, the DSO mode management frame is a DSO mode request frame, and the setting module is configured to set, based on the DSO mode request frame, the DSO mode and/or the operational parameter for performing the DSO operation between the first device and the second device in response to determining to accept the DSO mode and/or the operational parameter for performing the DSO operation that is indicated by the DSO mode request frame.

In some embodiments, the apparatus further includes a second transmitting module, configured to transmit a first DSO mode response frame as a response to the second device; wherein the first DSO mode response frame indicates whether to accept the DSO mode and/or the operational parameter for performing the DSO operation that is indicated by the DSO mode request frame.

In some embodiments, the first DSO mode response frame includes a first status code; wherein the first status code indicates whether to accept the DSO mode and/or the operational parameter for performing the DSO operation that is indicated by the DSO mode request frame.

In some embodiments, the apparatus further includes a third transmitting module, configured to transmit an unsolicited second DSO mode response frame to the second device, wherein the second DSO mode response frame indicates a recommended DSO mode and/or a recommended operational parameter for performing the DSO operation.

In some embodiments, the second DSO mode response frame includes a second status code; wherein the second status code is configured to indicate that the second DSO mode response frame is configured to recommend the DSO mode and/or the operational parameter for performing the DSO operation.

In some embodiments, the DSO mode management frame includes at least one of a DSO Mode Control field and a DSO Parameter Update field; wherein the DSO Mode Control field is configured to control the DSO mode between the first device and the second device, and the DSO Parameter Update field is configured to update an operational parameter for performing the DSO operation between the first device and the second device.

In some embodiments, the second DSO mode response frame includes at least one of a DSO Mode Control field or a DSO Parameter Update field; wherein the DSO Mode Control field is configured to control the DSO mode between the first device and the second device, and the DSO Parameter Update field is configured to update the operational parameter for performing the DSO operation between the first device and the second device.

In some embodiments, the DSO Mode Control field includes at least one of a DSO Mode subfield, a DSO Subchannel Bitmap subfield, a Maximum Transmission Bandwidth subfield, or a DSO Parameter Update Control field; wherein the DSO Mode subfield is configured to indicate a DSO mode to be transitioned to, the DSO Subchannel Bitmap subfield is configured to indicate the target subchannel via a bitmap, the Maximum Transmission Bandwidth subfield is configured to indicate a maximum permitted PPDU bandwidth for reception or transmission on the target subchannel, and the DSO Parameter Update Control field is configured to indicate whether the DSO Parameter Update field is present in a current frame.

In some embodiments, in a case where a parameter value in the DSO Mode subfield is a first parameter value, the DSO Mode subfield indicates that the DSO mode to be transitioned to is the enabled mode; or in a case where a parameter value in the DSO Mode subfield is a second parameter value, the DSO Mode subfield indicates that the DSO mode to be transitioned to is the disabled mode.

In some embodiments, the DSO Parameter Update field includes at least one of a DSO Mode Padding Delay subfield or a DSO Transition Delay subfield; wherein the DSO Mode Padding Delay subfield is configured to indicate a MAC padding duration of a channel switch indication frame, wherein the channel switch indication frame is configured to trigger the target device to switch to the target subchannel via the DSO mode to perform the frame exchange; and the DSO Transition Delay subfield is configured to indicate a switch delay for switching from the target subchannel to a conventional subchannel.

In some embodiments, in a case where the DSO mode management frame is a DSO mode notification frame, the DSO Parameter Update field includes a Switch Timeout subfield, wherein the Switch Timeout subfield is configured to indicate a timeout duration of transmitting the DSO mode notification frame as a response from the first device to the second device upon receiving the DSO mode notification frame.

In some embodiments, in a case where the first device is a non-AP device, and the second device is an AP device, the receiving module is configured to receive a channel switch indication frame from the second device in a case where the DSO mode between the first device and the second device is the enabled mode; and the apparatus further includes a first switching module, configured to switch to the target subchannel to perform the frame exchange with the second device.

In some embodiments, the first switching module is configured to switch to a conventional subchannel to perform the frame exchange with the second device within a transition delay indicated by the DSO mode management frame in response to end of the frame exchange on the target subchannel with the second device.

In some embodiments, in a case where the first device is an access point (AP) device, and the second device is a non-AP device, the apparatus further includes: a fourth transmitting module, configured to transmit a channel switch indication frame to the second device in a case where the DSO mode between the first device and the second device is the enabled mode; and the apparatus further includes a second switching module, configured to perform the frame exchange on the target subchannel with the second device.

In some embodiments, a frame tail of the channel switch indication frame includes a Padding field, wherein a duration corresponding to the Padding field is not less than a minimum MAC padding duration indicated by the DSO mode management frame.

In some embodiments, a PPDU bandwidth for performing the frame exchange on the target subchannel with the second device is not greater than a maximum PPDU bandwidth indicated by the DSO mode management frame.

FIG. 14 is a block diagram of an apparatus for channel operation according to some embodiments of the present disclosure. The apparatus has the function of the process performed by the second device in the method for channel operation.

As illustrated in FIG. 14, the apparatus includes: a transmitting module 1401, configured to transmit a DSO mode management frame to a first device; wherein the DSO mode management frame indicates that a DSO mode between the first device and the second device is an enabled mode or a disabled mode, wherein the enabled mode is a mode in which a target device is allowed to switch to a target subchannel via a DSO mode to perform frame exchange, wherein the target subchannel is indicated by the DSO mode management frame.

In some embodiments, the disabled mode is a mode in which the target device is not allowed to perform frame exchange via the DSO mode; the disabled mode is a mode in which the target device is not allowed to switch to the target subchannel via the DSO mode to perform the frame exchange.

In some embodiments, the target device is at least one of the first device or the second device.

In some embodiments, the apparatus further includes a setting module, configured to set, based on the DSO mode management frame, the DSO mode and/or an operational parameter for performing a DSO operation between the first device and the second device.

In some embodiments, the DSO mode management frame is a DSO mode notification frame, and the setting module is configured to: set, based on the DSO mode management frame, the DSO mode and/or the operational parameter for performing the DSO operation between the first device and the second device in response to receiving the DSO mode notification frame transmitted as a response by the first device within a timeout duration upon transmitting the DSO mode notification frame; or set, based on the DSO mode management frame, the DSO mode and/or the operational parameter for performing the DSO operation between the first device and the second device upon arrival of a timeout duration in response to not receiving the DSO mode notification frame transmitted as a response by the first device within the timeout duration upon transmitting the DSO mode notification frame.

In some embodiments, the DSO mode management frame is a DSO mode request frame, and the setting module is configured to: receive a first DSO mode response frame transmitted as a response by the first device, wherein the first DSO mode response frame indicates whether to accept the DSO mode and/or the operational parameter for performing the DSO operation that is indicated by the DSO mode request frame; and set, based on the DSO mode request frame, the DSO mode and/or the operational parameter for performing the DSO operation between the first device and the second device in a case where the first DSO mode response frame indicates acceptance of the DSO mode and/or the operational parameter for performing the DSO operation that is indicated by the DSO mode request frame.

In some embodiments, the first DSO mode response frame includes a first status code, wherein the first status code indicates whether to accept the DSO mode and/or the operational parameter for performing the DSO operation that is indicated by the DSO mode request frame.

In some embodiments, the apparatus further includes a receiving module, configured to receive an unsolicited second DSO mode response frame from the first device, wherein the second DSO mode response frame indicates a recommended DSO mode and/or a recommended operational parameter for performing the DSO operation.

In some embodiments, the transmitting module, configured to transmit the DSO mode management frame to the first device based on the second DSO mode response frame.

In some embodiments, the second DSO mode response frame includes a second status code, wherein the second status code indicates that the second DSO mode response frame is configured to recommend the DSO mode and/or the operational parameter for performing the DSO operation.

In some embodiments, the DSO mode management frame includes at least one of a DSO Mode Control field and a DSO Parameter Update field; wherein the DSO Mode Control field is configured to control the DSO mode between the first device and the second device, and the DSO Parameter Update field is configured to update an operational parameter for performing a DSO operation between the first device and the second device.

In some embodiments, the second DSO mode response frame includes at least one of a DSO Mode Control field and a DSO Parameter Update field; wherein the DSO Mode Control field is configured to control the DSO mode between the first device and the second device, and the DSO Parameter Update field is configured to update the operational parameter for performing a DSO operation between the first device and the second device.

In some embodiments, the DSO Mode Control field includes at least one of a DSO Mode subfield, a DSO Subchannel Bitmap subfield, a Maximum Transmission Bandwidth subfield, or a DSO Parameter Update Control field; wherein the DSO Mode subfield is configured to indicate a DSO mode to be transitioned to, the DSO Subchannel Bitmap subfield is configured to indicate the target subchannel via a bitmap, the Maximum Transmission Bandwidth subfield is configured to indicate a maximum permitted PPDU bandwidth for reception or transmission on the target subchannel, and the DSO Parameter Update Control field is configured to indicate whether the DSO Parameter Update field is present in a current frame.

In some embodiments, in a case where a parameter value in the DSO Mode subfield is a first parameter value, the DSO Mode subfield indicates that the DSO mode to be transitioned to is the enabled mode; or in a case where a parameter value in the DSO Mode subfield is a second parameter value, the DSO Mode subfield indicates that the DSO mode to be transitioned to is the disabled mode.

In some embodiments, the DSO Parameter Update field includes at least one of a DSO Mode Padding Delay subfield or a DSO Transition Delay subfield; wherein the DSO Mode Padding Delay subfield is configured to indicate a minimum MAC padding duration of a channel switch indication frame, wherein the channel switch indication frame is configured to trigger the target device to switch to the target subchannel via the DSO mode to perform the frame exchange; and the DSO Transition Delay subfield is configured to indicate a switch delay for switching from the target subchannel to a conventional subchannel.

In some embodiments, in a case where the DSO mode management frame is a DSO mode notification frame, the DSO Parameter Update field includes a Switch Timeout subfield, wherein the Switch Timeout subfield is configured to indicate a timeout duration of transmitting the DSO mode notification frame as a response from the first device to the second device upon receiving the DSO mode notification frame.

In some embodiments, in a case where the first device is a non-AP device, and the second device is an AP device, the transmitting module is further configured to transmit a channel switch indication frame to the first device in a case where the DSO mode between the first device and the second device is the enabled mode; and the apparatus further includes a first switching module, configured to perform the frame exchange on the target subchannel with the first device.

In some embodiments, in a case where the first device is an AP device, and the second device is a non-AP device, the apparatus further includes: a second receiving module, configured to receive a channel switch indication frame from the first device in a case where the DSO mode between the first device and the second device is the enabled mode; and the apparatus further includes a second switching module, configured to switch to performing the frame exchange on the target subchannel with the second device.

In some embodiments, the second switching module is further configured to switch to a conventional subchannel to perform the frame exchange with the first device within a transition delay indicated by the DSO mode management frame in response to end of the frame exchange on the target subchannel with the first device.

In some embodiments, a frame tail of the channel switch indication frame includes a padding element, wherein a duration corresponding to the padding element is not less than a minimum MAC padding duration indicated by the DSO mode management frame.

In some embodiments, a PPDU bandwidth for data transmission on the target subchannel with the first device is not greater than a maximum PPDU bandwidth indicated by the DSO mode management frame.

It should be noted that, in a case where the apparatus according to the above embodiments implements the functions thereof, the division of the functional modules is merely exemplary. In practice, the above functions may be assigned to and completed by different functional modules according to actual needs, that is, the apparatus may be divided into different functional modules, to implement all or part of the above functions.

With regard to the apparatus in the above embodiments, the specific manner in which each module performs operations has been described in detail in the embodiments related to the method and is not described in detail herein. For details that are not specified in the apparatus embodiments, reference may be made to the above method embodiments.

FIG. 15 is a schematic structural diagram of a communication device1500 according to some embodiments of the present disclosure. The communication device 1500 includes: a processor 1501, a receiver 1502, a transmitter 1503, a memory 1504, and a bus 1505.

The processor 1501 includes one or more processing cores, and achieves various functional applications and information processing by running software programs and modules.

The receiver 1502 and the transmitter 1503 are practiced as a communication assembly. The communication assembly is a communication chip, and is also referred to as a transceiver.

The memory 1504 is connected to the processor 1501 via the bus 1505.

The memory 1504 is configured to store one or more computer programs, and the processor 1501 is configured to load and run the one or more computer programs to perform various processes in the above method embodiments.

In addition, the memory 1504 is practiced by any type of volatile or non-volatile storage device or combinations thereof. The volatile or non-volatile storage device includes, but is not limited to, a disk or optical disc, an electrically erasable programmable read-only memory, an erasable programmable read-only memory, a persistent random-access memory, a read-only memory, a magnetic memory, a flash memory, or a programmable read-only memory.

In some embodiments, the communication device includes a processor, a memory, and a transceiver (the transceiver includes a receiver and a transmitter, the receiver is configured to receive information, and the transmitter is configured to transmit information).

In some embodiments, the processor and the transceiver are configured to perform all or part of processes performed by the first device or the second device in the embodiments illustrated in FIG. 4, FIG. 5, or FIG. 6, which is not described herein any further.

Some embodiments of the present disclosure further provide a computer-readable storage medium storing one or more computer programs, wherein the one or more computer programs, when loaded and run by a processor, cause the processor to perform all or part of processes performed by the first device or the second device in the embodiments illustrated in FIG. 4, FIG. 5, or FIG. 6.

Some embodiments of the present disclosure further provide a computer program product. The computer program product includes one or more computer instructions, wherein the one or more computer instructions are stored in a computer-readable storage medium, and a processor in a communication device is configured to read, load, and execute the one or more computer instructions to cause the communication device to perform all or part of processes performed by the first device or the second device in the embodiments illustrated in FIG. 4, FIG. 5, or FIG. 6.

Some embodiments of the present disclosure further provide a chip. The chip includes programmable logic circuitry and/or program instructions, and when running on a communication device, causes the communication device to perform all or part of processes performed by the first device or the second device in the embodiments illustrated in FIG. 4, FIG. 5, or FIG. 6.

Some embodiments of the present disclosure further provide a computer program. The computer program, when loaded and run by a processor in a communication device, causes the communication device to perform all or part of processes performed by the first device or the second device in the embodiments illustrated in FIG. 4, FIG. 5, or FIG. 6

Those skilled in the art should understand that in one or more of the above embodiments, the functions described in the embodiments of the present disclosure may be implemented in hardware, software, firmware, or any combination thereof. The functions, when implemented in software, may be stored in a computer-readable medium or transmitted as one or more instructions or codes on a computer-readable medium. The computer-readable medium includes a computer storage medium and a communication medium, where the communication medium includes any medium that facilitates the transfer of a computer program from one place to another. The storage medium is any available medium that is accessible by a general-purpose or special-purpose computer.

Described above are merely exemplary embodiments of the present disclosure, and are not intended to limit the present disclosure. Any modifications, equivalent replacements, improvements and the like made within the spirit and principles of the present disclosure should be encompassed within the scope of protection of the present disclosure.

## Claims

1. A method for channel operation, performed by a first device, the method comprising:
receiving a dynamic subchannel operation (DSO) mode management frame from a second device;
wherein the DSO mode management frame is configured to indicate that a DSO mode between the first device and the second device is an enabled mode or a disabled mode, wherein the enabled mode is a mode in which a target device is allowed to switch to a target subchannel via a DSO mode to perform frame exchange, wherein the target subchannel is indicated by the DSO mode management frame.

2. The method according to claim 1, wherein
the disabled mode is a mode in which the target device is not allowed to perform frame exchange via the DSO mode; or
the disabled mode is a mode in which the target device is not allowed to switch to the target subchannel/subband via the DSO mode to perform the frame exchange.

3. The method according to claim 1 or 2, wherein the target device is at least one of the first device or the second device.

4. The method according to any one of claims 1 to 3, further comprising:
setting, based on the DSO mode management frame, the DSO mode and/or an operational parameter for performing a DSO operation between the first device and the second device.

5. The method according to any one of claims 1 to 4, wherein the DSO mode management frame is a DSO mode notification frame, and the method further comprises:
transmitting the DSO mode notification frame as a response to the second device within a timeout duration upon receiving the DSO mode notification frame.

6. The method according to claim 4, wherein the DSO mode management frame is a DSO mode request frame, and setting, based on the DSO mode management frame, the DSO mode and/or the operational parameter for performing the DSO operation between the first device and the second device comprises:
setting, based on the DSO mode request frame, the DSO mode and/or the operational parameter for performing the DSO operation between the first device and the second device in response to determining to accept the DSO mode and/or the operational parameter for performing the DSO operation that is indicated by the DSO mode request frame.

7. The method according to claim 6, further comprising:
transmitting a first DSO mode response frame as a response to the second device, wherein the first DSO mode response frame is configured to indicate whether to accept the DSO mode and/or the operational parameter for performing the DSO operation that is indicated by the DSO mode request frame.

8. The method according to claim 7, wherein the first DSO mode response frame comprises a first status code, wherein the first status code is configured to indicate whether to accept the DSO mode and/or the operational parameter for performing the DSO operation that is indicated by the DSO mode request frame.

9. The method according to any one of claims 6 to 8, further comprising:
transmitting an unsolicited second DSO mode response frame to the second device, wherein the second DSO mode response frame is configured to indicate a recommended DSO mode and/or a recommended operational parameter for performing the DSO control.

10. The method according to claim 9, wherein the second DSO mode response frame comprises a second status code, wherein the second status code is configured to indicate that the second DSO mode response frame is configured to recommend the DSO mode and/or the operational parameter for performing the DSO operation.

11. The method according to any one of claims 1 to 10, wherein the DSO mode management frame comprises at least one of a DSO Mode Control field or a DSO Parameter Update field; wherein
the DSO Mode Control field is configured to control the DSO mode between the first device and the second device; and
the DSO Parameter Update field is configured to update an operational parameter for performing DSO between the first device and the second device.

12. The method according to claim 9 or 10, wherein the second DSO mode response frame comprises at least one of a DSO Mode Control field or a DSO Parameter Update field; wherein
the DSO Mode Control field is configured to control the DSO mode between the first device and the second device; and
the DSO Parameter Update field is configured to update the operational parameter for performing DSO operation between the first device and the second device.

13. The method according to claim 11 or 12, wherein the DSO Mode Control field comprises at least one of a DSO Mode subfield, a DSO Subchannel Bitmap subfield, a Maximum Transmission Bandwidth subfield, or a DSO Parameter Update Control field; wherein
the DSO Mode subfield is configured to indicate a DSO mode to be transitioned to;
the DSO Subchannel Bitmap subfield is configured to indicate the target subchannel via a bitmap;
the Maximum Transmission Bandwidth subfield is configured to indicate a maximum permitted physical layer protocol data unit (PPDU) bandwidth for reception or transmission on the target subchannel;
the DSO Parameter Update Control field is configured to indicate whether the DSO Parameter Update field is present in a current frame.

14. The method according to claim 13, wherein
in a case where a parameter value in the DSO Mode subfield is a first parameter value, the DSO Mode subfield indicates that the DSO mode to be transitioned to is the enabled mode; or
in a case where a parameter value in the DSO Mode subfield is a second parameter value, the DSO Mode subfield indicates that the DSO mode to be transitioned to is the disabled mode.

15. The method according to any one of claims 11 to 14, wherein the DSO Parameter Update field comprises at least one of a DSO Mode Padding Delay subfield or a DSO Transition Delay subfield; wherein
the DSO Mode Padding Delay subfield is configured to indicate a minimum medium access control (MAC) padding duration of a channel switch indication frame, wherein the channel switch indication frame is configured to trigger the target device to switch to the target subchannel via the DSO mode to perform the frame exchange; and
the DSO Transition Delay subfield is configured to indicate a switching delay for switching from the target subchannel to a conventional subchannel.

16. The method according to any one of claims 11 to 15, wherein in a case where the DSO mode management frame is a DSO mode notification frame, the DSO Parameter Update field comprises a Switch Timeout subfield;
wherein the Switch Timeout subfield is configured to indicate a timeout duration of transmitting the DSO mode notification frame as a response from the first device to the second device upon receiving the DSO mode notification frame.

17. The method according to any one of claims 1 to 16, wherein in a case where the first device is a non-access point (non-AP) device, and the second device is an AP device, the method further comprises:
receiving a channel switch indication frame from the second device in a case where the DSO mode between the first device and the second device is the enabled mode; and
switching to the target subchannel to perform the frame exchange with the second device.

18. The method according to claim 17, further comprising:
switching to a conventional subchannel to perform the frame exchange with the second device within a transition delay indicated by the DSO mode management frame in response to end of the frame exchange on the target subchannel with the second device.

19. The method according to any one of claims 1 to 16, wherein in a case where the first device is an access point (AP) device, and the second device is a non-AP device, the method further comprises:
transmitting a channel switch indication frame to the second device in a case where the DSO mode between the first device and the second device is the enabled mode; and
performing the frame exchange on the target subchannel with the second device.

20. The method according to any one of claims 17 to 19, wherein a frame tail of the channel indication frame comprises a padding element, wherein a duration corresponding to the padding element is not less than a minimum medium access control (MAC) padding duration indicated by the DSO mode management frame.

21. The method according to any one of claims 17 to 20, wherein a physical layer protocol data unit (PPDU) bandwidth for performing the frame exchange on the target subchannel with the second device is not greater than a maximum PPDU bandwidth indicated by the DSO mode management frame.

22. A method for channel operation, performed by a second device, the method comprising:
transmitting a dynamic subchannel operation (DSO) mode management frame to a first device;
wherein the DSO mode management frame is configured to indicate that a DSO mode between the first device and the second device is an enabled mode or a disabled mode, wherein the enabled mode is a mode in which a target device is allowed to switch to a target subchannel via a DSO mode to perform frame exchange, wherein the target subchannel is indicated by the DSO mode management frame.

23. The method according to claim 22, wherein
the disabled mode is a mode in which the target device is not allowed to perform frame exchange via the DSO mode; or
the disabled mode is a mode in which the target device is not allowed to switch to the target subchannel via the DSO mode to perform the frame exchange.

24. The method according to claim 22 or 23, wherein the target device is at least one of the first device or the second device.

25. The method according to any one of claims 22 to 24, further comprising:
setting, based on the DSO mode management frame, the DSO mode and/or an operational parameter for performing a DSO operation between the first device and the second device.

26. The method according to claim 25, wherein the DSO mode management frame is a DSO mode notification frame, and setting, based on the DSO mode management frame, the DSO mode and/or the operational parameter for performing the DSO operation between the first device and the second device comprises:
setting, based on the DSO mode management frame, the DSO mode and/or the operational parameter for performing the DSO operation between the first device and the second device in response to receiving the DSO mode notification frame transmitted as a response by the first device within a timeout duration upon transmitting the DSO mode notification frame; or
setting, based on the DSO mode management frame, the DSO mode and/or the operational parameter for performing the DSO operation between the first device and the second device upon arrival of a timeout duration in response to not receiving the DSO mode notification frame transmitted as a response by the first device within the timeout duration upon transmitting the DSO mode notification frame.

27. The method according to claim 25, wherein the DSO mode management frame is a DSO mode request frame, and setting, based on the DSO mode management frame, the DSO mode between the first device and the second device comprises:
receiving a first DSO mode response frame transmitted as a response by the first device, wherein the first DSO mode response frame is configured to indicate whether to accept the DSO mode and/or the operational parameter for performing the DSO operation that is indicated by the DSO mode request frame; and
setting, based on the DSO mode request frame, the DSO mode and/or the operational parameter for performing the DSO operation between the first device and the second device in a case where the first DSO mode response frame indicates acceptance of the DSO mode and/or the operational parameter for performing the DSO operation that is indicated by the DSO mode request frame.

28. The method according to claim 27, wherein the first DSO mode response frame comprises a first status code, wherein the first status code is configured to indicate whether to accept the DSO mode and/or the operational parameter for performing the DSO operation that is indicated by the DSO mode request frame.

29. The method according to claim 27 or 28, further comprising:
receiving an unsolicited second DSO mode response frame from the first device, wherein the second DSO mode response frame is configured to indicate a recommended DSO mode and/or a recommended operational parameter for performing the DSO operation.

30. The method according to claim 29, wherein transmitting the DSO mode management frame to the first device comprises:
transmitting the DSO mode management frame to the first device based on the second DSO mode response frame.

31. The method according to claim 29 or 30, wherein the second DSO mode response frame comprises a second status code, wherein the second status code is configured to indicate that the second DSO mode response frame is configured to recommend the DSO mode and/or the operational parameter for performing the DSO operation.

32. The method according to any one of claims 22 to 31, wherein the DSO mode management frame comprises at least one of a DSO Mode Control field or a DSO Parameter Update field; wherein
the DSO Mode Control field is configured to control the DSO mode between the first device and the second device; and
the DSO Parameter Update field is configured to update an operational parameter for performing a DSO operation between the first device and the second device.

33. The method according to claim 30 or 31, wherein the second DSO mode response frame comprises at least one of a DSO Mode Control field or a DSO Parameter Update field; wherein
the DSO Mode Control field is configured to control the DSO mode between the first device and the second device; and
the DSO Parameter Update field is configured to update the operational parameter for performing a DSO operation between the first device and the second device.

34. The method according to claim 32 or 33, wherein the DSO Mode Control field comprises at least one of a DSO Mode subfield, a DSO Subchannel Bitmap subfield, a Maximum Transmission Bandwidth subfield, or a DSO Parameter Update Control field; wherein
the DSO Mode subfield is configured to indicate a DSO mode to be transitioned to;
the DSO Subchannel Bitmap subfield is configured to indicate the target subchannel via a bitmap;
the Maximum Transmission Bandwidth subfield is configured to indicate a maximum permitted physical layer protocol data unit (PPDU) bandwidth for reception or transmission on the target subchannel; and
the DSO Parameter Update Control field is configured to indicate whether the DSO Parameter Update field is present in a current frame.

35. The method according to claim 34, wherein
in a case where a parameter value in the DSO Mode subfield is a first parameter value, the DSO Mode subfield indicates that the DSO mode to be transitioned is the enabled mode; or
in a case where a parameter value in the DSO Mode subfield is a second parameter value, the DSO Mode subfield indicates that the DSO mode to be transitioned is the disabled mode.

36. The method according to any one of claims 32 to 35, wherein the DSO Parameter Update field comprises at least one of a DSO Mode Padding Delay subfield or a DSO Transition Delay subfield; wherein
the DSO Mode Padding Delay subfield is configured to indicate a minimum medium access control (MAC) padding duration of a channel switch indication frame, wherein the channel switch indication frame is configured to trigger the target device to switch to the target subchannel via the DSO mode to perform the frame exchange; and
the DSO Transition Delay subfield is configured to indicate a switching delay for switching from the target subchannel to a conventional subchannel.

37. The method according to any one of claims 32 to 36, wherein in a case where the DSO mode management frame is a DSO mode notification frame, the DSO Parameter Update field comprises a Switch Timeout subfield;
wherein the Switch Timeout subfield is configured to indicate a timeout duration of transmitting the DSO mode notification frame as a response from the first device to the second device upon receiving the DSO mode notification frame.

38. The method according to any one of claims 22 to 37, wherein in a case where the first device is a non-access point (AP) device, and the second device is an AP device, the method further comprises:
transmitting a channel switch indication frame to the first device in a case where the DSO mode between the first device and the second device is the enabled mode; and
performing the frame exchange on the target subchannel with the first device.

39. The method according to any one of claims 22 to 37, wherein in a case where the first device is an access point (AP) device, and the second device is a non-AP device, the method further comprises:
receiving a channel switch indication frame from the first device in a case where the DSO mode between the first device and the second device is the enabled mode; and
switching to performing the frame exchange on the target subchannel with the second device.

40. The method according to claim 39, further comprising:
switching to a conventional subchannel to perform the frame exchange with the first device within a transition delay indicated by the DSO mode management frame in response to end of the frame exchange on the target subchannel with the first device.

41. The method according to any one of claims 38 to 40, wherein a frame tail of the channel switch indication frame comprises a padding element, wherein a duration corresponding to the padding element is not less than a minimum medium access control (MAC) padding duration indicated by the DSO mode management frame.

42. The method according to any one of claims 38 to 41, wherein a physical layer protocol data unit (PPDU) bandwidth for data transmission on the target subchannel with the first device is not greater than a maximum PPDU bandwidth indicated by the DSO mode management frame.

43. An apparatus for channel operation, comprising:
a receiving module, configured to receive a dynamic subchannel operation (DSO) mode management frame from a second device;
wherein the DSO mode management frame indicates that a DSO mode between a first device and the second device is an enabled mode or a disabled mode, wherein the enabled mode is a mode in which a target device is allowed to switch to a target subchannel via a DSO mode to perform frame exchange, wherein the target subchannel is indicated by the DSO mode management frame.

44. An apparatus for channel operation, comprising:
a transmitting module, configured to transmit a dynamic subchannel operation (DSO) mode management frame to a first device;
wherein the DSO mode management frame indicates that a DSO mode between the first device and a second device is an enabled mode or a disabled mode, wherein the enabled mode is a mode in which a target device is allowed to switch to a target subchannel via a DSO mode to perform frame exchange, wherein the target subchannel is indicated by the DSO mode management frame.

45. A communication device, practiced as a first device, and the communication device comprising: a processor, a memory, and a transceiver;
wherein the transceiver is configured to receive a dynamic subchannel operation (DSO) mode management frame from a second device;
wherein the DSO mode management frame indicates that a DSO mode between the first device and the second device is an enabled mode or a disabled mode, wherein the enabled mode is a mode in which a target device is allowed to switch to a target subchannel via a DSO mode to perform frame exchange, wherein the target subchannel is indicated by the DSO mode management frame.

46. A communication device, practiced as a second device, and the communication device comprising: a processor, a memory, and a transceiver;
wherein the transceiver is configured to transmit a dynamic subchannel operation (DSO) mode management frame to a first device;
wherein the DSO mode management frame indicates that a DSO mode between the first device and the second device is an enabled mode or a disabled mode, wherein the enabled mode is a mode in which a target device is allowed to switch to a target subchannel via a DSO mode to perform frame exchange, wherein the target subchannel is indicated by the DSO mode management frame.

47. A computer-readable storage medium, storing one or more computer programs, wherein the one or more computer programs, when loaded and run by a processor, cause the processor to perform the method for channel operation as defined in any one of claims 1 to 42.

48. A chip, wherein the chip is configured to run in a communication device to cause the communication device to perform the method for channel operation as defined in any one of claims 1 to 42.

49. A computer program product, comprising: one or more computer instructions, wherein the one or more computer instructions are stored in a computer-readable storage medium, and the one or more computer instructions, when read, loaded, and executed by a processor of a communication device, cause the communication device to perform the method for channel operation as defined in any one of claims 1 to 42.

50. A computer program, wherein the computer program, when loaded and run by a processor in a communication device, causes the communication device to perform the method for channel operation as defined in any one of claims 1 to 42.
